(19) **Europäisches Patentamt**
**European Patent Office**
**Office européen des brevets**

(11) **EP 4 447 364 A1**

(12) **EUROPEAN PATENT APPLICATION**
published in accordance with Art. 153(4) EPC

(43) Date of publication:
**16.10.2024 Bulletin 2024/42**

(21) Application number: **23737075.4**

(22) Date of filing: **05.01.2023**

(51) International Patent Classification (IPC):
**H04L 5/00** (2006.01)          **H04W 24/08** (2009.01)

(52) Cooperative Patent Classification (CPC):
**H04L 5/00; H04W 24/08**

(86) International application number:
**PCT/CN2023/070572**

(87) International publication number:
**WO 2023/131212 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **07.01.2022   CN 202210012729**
              **08.02.2022   CN 202210117890**

(71) Applicant: **Huawei Technologies Co., Ltd.**
**Shenzhen, Guangdong 518129 (CN)**

(72) Inventors:
• **WANG, Bichai**
  **Shenzhen, Guangdong 518129 (CN)**
• **LI, Xueru**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **SIDELINK COMMUNICATION METHOD AND APPARATUS**

(57)    This application provides a sidelink communication method, applied to two terminal devices that perform sidelink communication. The method includes: A first terminal device sends, in a first time unit, a first reference signal used for channel measurement to a second terminal device, where the first time unit is before a second time unit and is associated with the second time unit, and the second time unit is a time unit in which the first terminal device and the second terminal device perform SL transmission; the first terminal device receives, in a third time unit, first feedback information sent by the second terminal device, where the first feedback information is determined by the second terminal device based on the first reference signal, the first feedback information is used to determine a parameter for SL transmission, and the third time unit is after the first time unit and before the second time unit. In this way, the second terminal device performs channel measurement in advance before data transmission, and reports the feedback information to the first terminal device, thereby enabling accurate link adaptation, and improving transmission performance.

FIG. 4

**Description**

This application claims priorities to Chinese Patent Application No. 202210012729.5, filed with the China National Intellectual Property Administration on January 7, 2022 and entitled "METHOD FOR DETERMINING REFERENCE POINT OF EFFECTIVE PERIOD", and to Chinese Patent Application No. 202210117890.9, filed with the China National Intellectual Property Administration on February 8, 2022 and entitled "SIDELINK COMMUNICATION METHOD AND APPARATUS", which are incorporated herein by reference in their entireties.

**TECHNICAL FIELD**

This application relates to the field of communication technologies, and in particular, to a sidelink communication method and an apparatus.

**BACKGROUND**

Different from downlink (downlink, DL) communication and uplink (uplink, UL) communication in a cellular network, sidelink (sidelink, SL) communication can support direct communication between terminal devices (user equipment, UE), that is, user data may be directly transmitted between the UE. This avoids transmission of the user data through forwarding in a network during cellular communication, thereby reducing a transmission delay and easing a network load. However, a quantity of resources in a resource pool used for SL communication is limited. When there are a large quantity of users, different UE may use a same time-frequency resource for transmission. When transmitting UE (transmitting UE, TxUE) collides with different TxUE in different transmission periods, receiving UE (receiving UE, RxUE) on a target link of the TxUE receives interference of different strengths in the different transmission periods. In this case, channel state information (channel state information, CSI) most recently reported by the RxUE to the TxUE may be greatly different from a channel state for next transmission. Then, there is a problem of inaccurate measurement in determining, by the TxUE based on the CSI reported by the RxUE, a modulation and coding scheme (modulation and coding scheme, MCS) used for the next transmission, resulting in poor transmission performance.

Therefore, a more effective SL CSI measurement mechanism needs to be designed, to improve CSI measurement precision, so as to improve SL transmission performance.

**SUMMARY**

This application provides a sidelink communication method and an apparatus, to improve sidelink transmission performance.

According to a first aspect, this application provides a sidelink communication method, and the method may be performed by a first terminal device. The method may be implemented by using the following steps: A first terminal device sends, in a first time unit, a first reference signal used for channel measurement to a second terminal device, where the first time unit is associated with a second time unit, the first time unit is before the second time unit, and the second time unit is a time unit in which the first terminal device and the second terminal device perform SL transmission; and the first terminal device receives, in a third time unit, first feedback information sent by the second terminal device, where the first feedback information is determined by the second terminal device based on the first reference signal, the first feedback information is used by the first terminal device to determine a parameter for SL transmission with the second terminal device in the second time unit, the third time unit is after the first time unit, and the third time unit is before the second time unit.

In this implementation, an association relationship between the second time unit for data transmission and the first time unit for sending a reference signal used for channel measurement is established, so that the receiving end device, that is, the second terminal device, can perform channel measurement in advance before data transmission, and report the feedback information of channel measurement to the transmitting end device, that is, the first terminal device. In this way, accurate link adaptation is enabled, and data transmission performance is improved.

In a possible design, before that a first terminal device sends, in a first time unit, a first reference signal used for channel measurement to a second terminal device, the method further includes: The first terminal device determines the second time unit in a fourth time unit, where the fourth time unit is before the first time unit; and the first terminal device determines the first time unit based on the second time unit and an association relationship between the second time unit and the first time unit.

In this implementation, the transmitting end device, that is, the first terminal device, may determine, in advance, the second time unit for data transmission, and further determine the first time unit used for sending the reference signal.

In a possible design, the first time unit being associated with the second time unit includes: The first time unit is a time unit that is closest to the second time unit and that is in a time unit meeting a first condition, where the first condition is that a time interval between the first time unit and the second time unit is greater than or not less than a first time interval.

In a possible design, that a first terminal device sends, in a first time unit, a first reference signal used for channel measurement to a second terminal device includes: The first terminal device sends the first reference signal to the second terminal device on a first resource, where the first resource is located in the first time unit.

In a possible design, the first time unit being associated with the second time unit includes: The first time unit is associated with N time units, where N is a positive integer less than or equal to M, M is a positive integer, the second time unit is an $i^{th}$ time unit in the N time units, and $0 \leq i < N$; and an index range of resource elements REs in each physical resource block PRB in a $j^{th}$ frequency domain unit on a first resource that corresponds to a $j^{th}$ frequency domain unit of the second time unit is [i*$N_{REset}$, (i+1)*$N_{REset}$-1], where $N_{REset} = \lfloor 12/M \rfloor$ ; or an index range of PRBs on a first resource that corresponds to a $j^{th}$ frequency domain unit of the second time unit is [(i+j*M)*$N_{PRBset}$, (i+1+j*M)*$N_{PRBset}$-1], where $N_{PRBset} = \lfloor N_{PRB}/(N_{subCH} * M) \rfloor$ , $0 \leq j < N_{subCH}$, $N_{subCH}$ is a quantity of frequency domain units in a resource pool, and $N_{PRB}$ is a quantity of PRBs included in the first resource.

In a possible design, that the first terminal device sends the first reference signal to the second terminal device on a first resource includes: The first terminal device sends the first reference signal to the second terminal device on at least one RE, where the first resource includes the at least one RE, and the at least one RE is determined based on a source address and/or a target address of the first terminal device.

In a possible design, the first resource is a periodic resource.

In a possible design, at least one of the following is preconfigured by the resource pool or configured by a network device: the association relationship between the second time unit and the first time unit; a period of the first resource; a maximum quantity of time units associated with the first time unit; and the first time interval.

In a possible design, the first resource includes one or more symbols, a last symbol before the first resource is used by the first terminal device to send a first signal, transmit power of the first signal is equal to transmit power of each symbol used by the first terminal device to send the first reference signal, and/or a $1^{st}$ symbol after the first resource is not used to transmit a physical sidelink shared channel PSSCH and/or a physical sidelink control channel PSCCH.

In a possible design, that a last symbol before the first resource is used by the first terminal device to send a first signal includes: the last symbol before the first resource is used by the first terminal device to send the first reference signal to the second terminal device.

In a possible design, transmit power of an RE used to send the first reference signal in the first resource is equal to transmit power of an RE used for SL transmission in a second resource; or total transmit power of all REs in each symbol used to send the first reference signal in the first resource is equal to total transmit power of all REs in each symbol used for SL transmission in a second resource.

In a possible design, before that a first terminal device sends, in a first time unit, a first reference signal used for channel measurement to a second terminal device, the method further includes: The first terminal device sends first indication information to the second terminal device, where the first indication information indicates the second terminal device to perform channel measurement before the second time unit; or the first indication information indicates the second terminal device to perform channel measurement in a time unit associated with the second time unit; or the first indication information indicates the second terminal device to perform periodic channel measurement.

In this implementation, the transmitting end device, that is, the first terminal device, sends activation information to the receiving end device, that is, the second terminal device in advance, to enable the receiving end device to perform channel measurement in advance and report the feedback information of channel measurement.

In a possible design, the first time unit is a time unit that is determined by a third terminal device and that is for sending a second reference signal to the first terminal device, the first time unit is associated with a fifth time unit, the fifth time unit is a time unit in which the third terminal device and the first terminal device perform SL transmission, and a priority of SL transmission between the first terminal device and the second terminal device is higher than or equal to a priority of SL transmission between the third terminal device and the first terminal device.

In this implementation, when there is a conflict between receiving a reference signal and sending a reference signal by the terminal device on a same resource, whether the terminal device receives the reference signal or sends the reference signal may be determined based on a priority of an SL transmission service.

In a possible design, a time interval between the first time unit and the third time unit is greater than or not less than a sum of a minimum time required by the second terminal device to perform channel measurement and a minimum time required by the second terminal device to generate the first feedback information; and a time interval between the third time unit and the second time unit is greater than or not less than a sum of a minimum time required by the first terminal device to decode the first feedback information and a minimum time required by the first terminal device to generate an SL transmission signal.

In a possible design, a sequence of the first reference signal is generated based on the source address and/or the target address of the first terminal device.

According to a second aspect, this application provides a sidelink communication method, and the method may be performed by a first terminal device. The method may be implemented by using the following steps: A second terminal device receives, in a first time unit, a first reference signal used for channel measurement sent by the first terminal device, where the first time unit is associated with a second time unit, the first time unit is before the second time unit, and the second time unit is a time unit in which the first terminal device and the second terminal device perform SL transmission; and the second terminal device sends, in a third time unit, first feedback information to the first terminal device, where the first feedback information is determined by the second terminal device based on the first reference signal, the first feedback information is used by the first terminal device to determine a parameter for SL transmission with the second terminal device in the second time unit, the third time unit is after the first time unit, and the third time unit is before the second time unit.

In a possible design, the second time unit is determined by the first terminal device in a fourth time unit, the fourth time unit is before the first time unit, and the first time unit is determined by the first terminal device based on the second time unit and an association relationship between the second time unit and the first time unit.

In a possible design, the first time unit being associated with the second time unit includes: the first time unit is a time unit that is closest to the second time unit and that is in a time unit meeting a first condition, where the first condition is that a time interval between the first time unit and the second time unit is greater than or not less than a first time interval.

In a possible design, that a second terminal device receives, in a first time unit, a first reference signal used for channel measurement sent by the first terminal device includes: The second terminal device receives the first reference signal sent by the first terminal device on a first resource, where the first resource is located in the first time unit.

In a possible design, the first time unit being associated with the second time unit includes: The first time unit is associated with N time units, where N is a positive integer less than or equal to M, M is a positive integer, the second time unit is an $i^{th}$ time unit in the N time units, and $0 \leq i < N$; and an index range of resource elements REs in each physical resource block PRB in a $j^{th}$ frequency domain unit on a first resource that corresponds to a $j^{th}$ frequency domain unit of the second time unit is $[i*N_{REset}, (i+1)*N_{REset}-1]$, where $N_{REset} = \lfloor 12/M \rfloor$; or an index range of PRBs on a first resource that corresponds to a $j^{th}$ frequency domain unit of the second time unit is $[(i+j*M)*N_{PRBset}, (i+1+j*M)*N_{PRBset}-1]$, where $N_{PRBset} = \lfloor N_{PRB}/(N_{subCH} * M) \rfloor$, $0 \leq j < N_{subCH}$, $N_{subCH}$ is a quantity of frequency domain units in a resource pool, and $N_{PRB}$ is a quantity of PRBs included in the first resource.

In a possible design, that the second terminal device receives the first reference signal sent by the first terminal device on a first resource includes: The second terminal device receives, on at least one RE, the first reference signal sent by the first terminal device, where the first resource includes the at least one RE, and the at least one RE is determined based on a source address and/or a target address of the first terminal device.

In a possible design, the first resource is a periodic resource.

In a possible design, at least one of the following is preconfigured by the resource pool or configured by a network device: the association relationship between the second time unit and the first time unit; a period of the first resource; a maximum quantity of time units associated with the first time unit; and the first time interval.

In a possible design, the first resource includes one or more symbols, a last symbol before the first resource is used by the first terminal device to send a first signal, transmit power of the first signal is equal to transmit power of each symbol used by the first terminal device to send the first reference signal, and/or a 1st symbol after the first resource is not used to transmit a physical sidelink shared channel PSSCH and/or a physical sidelink control channel PSCCH.

In a possible design, that a last symbol before the first resource is used by the first terminal device to send a first signal includes: The last symbol before the first resource is used by the first terminal device to send the first reference signal to the second terminal device.

In a possible design, transmit power of an RE used to send the first reference signal in the first resource is equal to transmit power of an RE used for SL transmission in a second resource; or total transmit power of all REs in each symbol used to send the first reference signal in the first resource is equal to total transmit power of all REs in each symbol used for SL transmission in a second resource.

In a possible design, before that a second terminal device receives, in a first time unit, a first reference signal used for channel measurement sent by the first terminal device, the method further includes: The second terminal device receives first indication information sent by the first terminal device, where the first indication information indicates the second terminal device to perform channel measurement before the second time unit; or the first indication information indicates the second terminal device to perform channel measurement in a time unit associated with the second time unit; or the first indication information indicates the second terminal device to perform periodic channel measurement.

In a possible design, the first time unit is a time unit that is determined by a third terminal device and that is for sending a second reference signal to the first terminal device, the first time unit is associated with a fifth time unit, the fifth time unit is a time unit in which the third terminal device and the first terminal device perform SL transmission, and a priority of SL transmission between the first terminal device and the second terminal device is higher than or equal to a priority of SL transmission between the third terminal device and the first terminal device.

In a possible design, a time interval between the first time unit and the third time unit is greater than or not less than a sum of a minimum time required by the second terminal device to perform channel measurement and a minimum time required by the second terminal device to generate the first feedback information; and a time interval between the third time unit and the second time unit is greater than or not less than a sum of a minimum time required by the first terminal device to decode the first feedback information and a minimum time required by the first terminal device to generate an SL transmission signal.

In a possible design, a sequence of the first reference signal is generated based on the source address and/or the target address of the first terminal device.

For beneficial effects of the second aspect and the possible designs of the second aspect, refer to related descriptions of the first aspect. Details are not described herein again.

According to a third aspect, this application further provides a communication apparatus. The communication apparatus may be a first terminal device, or the communication apparatus may be a transmitting end device in a communication system. The communication apparatus has a function of implementing the first terminal device in any design in the first aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions of the first terminal device in any design in the first aspect. For details, refer to detailed descriptions in the method example. The details are not described herein again.

In a possible design, a structure of the communication apparatus includes a transceiver and a processor, and optionally, further includes a memory. The transceiver is configured to: receive and send data, and communicate and interact with another device in a communication system. The processor is configured to support the communication apparatus in performing corresponding functions of the first terminal device in any design in the first aspect. The memory is coupled to the processor, and stores program instructions and data that are necessary for the communication apparatus.

According to a fourth aspect, this application further provides a communication apparatus. The communication apparatus may be a second terminal device, or the communication apparatus may be a receiving end device in a communication system. The communication apparatus has a function of implementing the second terminal device in any design in the second aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions of the second terminal device in any design in the second aspect. For details, refer to detailed descriptions in the method example. The details are not described herein again.

In a possible design, a structure of the communication apparatus includes a transceiver and a processor, and optionally, further includes a memory. The transceiver is configured to: receive and send data, and communicate and interact with another device in a communication system. The processor is configured to support the communication apparatus in performing corresponding functions of the second terminal device in any design in the second aspect. The memory is coupled to the processor, and stores program instructions and data that are necessary for the communication apparatus.

According to a fifth aspect, an embodiment of this application provides a communication system. The communication system may include the foregoing first terminal device and the foregoing second terminal device.

According to a sixth aspect, an embodiment of this application provides a computer-readable storage medium. The computer-readable storage medium stores program instructions. When the program instructions are run on a computer, the computer is enabled to perform the method according to any one of the first aspect, the second aspect, and the possible designs thereof. For example, the computer-readable storage medium may be any usable medium that can be accessed by the computer. By way of an example rather than a limitation, the computer-readable medium may include a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can be used to carry or store desired program code in a form of instructions or a data structure and that can be accessed by the computer.

According to a seventh aspect, an embodiment of this application provides a computer program product including computer program code or instructions. When the computer program product runs on a computer, the computer is enabled to implement the method according to any one of the first aspect, the second aspect, and the possible designs thereof.

According to an eighth aspect, this application further provides a chip, including a processor. The processor is coupled to a memory, and is configured to read and execute program instructions stored in the memory, to enable the chip to implement the method according to any one of the first aspect, the second aspect, and the possible designs thereof.

For the foregoing aspects from the third aspect to the eighth aspect and technical effect that can be achieved in the foregoing aspects, refer to the descriptions of the technical effect that can be achieved in the possible solutions in the first aspect and the second aspect. Details are not described herein again.

## BRIEF DESCRIPTION OF DRAWINGS

FIG. 1 is a diagram of an architecture of a communication system according to this application;
FIG. 2 is a diagram of a resource used by a transmitting end device to send a CSI-RS according to an embodiment of this application;
FIG. 3 is a diagram of collision between terminal devices according to an embodiment of this application;
FIG. 4 is a schematic flowchart of a sidelink communication method according to an embodiment of this application;
FIG. 5 is a diagram of positions of time units according to an embodiment of this application;
FIG. 6a is a diagram 1 of an association between a first time unit and a second time unit according to an embodiment of this application;
FIG. 6b is a diagram 2 of an association between a first time unit and a second time unit according to an embodiment of this application;
FIG. 6c is a diagram 3 of an association between a first time unit and a second time unit according to an embodiment of this application;
FIG. 7 is a diagram of a symbol included in a slot for transmitting a CSI-RS according to an embodiment of this application;
FIG. 8 is a diagram of positions of slots according to an embodiment of this application;
FIG. 9 is a diagram 1 of a structure of a communication apparatus according to an embodiment of this application; and
FIG. 10 is a diagram 2 of a structure of a communication apparatus according to an embodiment of this application.

## DESCRIPTION OF EMBODIMENTS

To make objectives, technical solutions, and advantages of embodiments of this application clearer, the following further describes embodiments of this application in detail with reference to accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, new radio (new radio, NR), various future communication system like a 6th generation (6th generation, 6G) communication system, or the like.

In addition, the technical solutions provided in embodiments of this application may be applied to a cellular link, or may be applied to a link between devices, for example, a device-to-device (device to device, D2D) link or a link for communication between a vehicle and another apparatus (vehicle to x, V2X). The D2D link or the V2X link may alternatively be referred to as a side link, a secondary link, a sidelink (sidelink, SL), or the like. In embodiments of this application, the foregoing terms refer to links established between devices of a same type, and have a same meaning. The link between devices of a same type may be a link between terminal devices, a link between base stations, a link between relay nodes, or the like. This is not limited in embodiments of this application. For the link between the terminal devices, the 3GPP Release Rel-12/13 defines a D2D link, and the 3GPP including the Rel-14/15 defines, for the Internet of Vehicles, a V2X link between vehicles, between a vehicle and a mobile phone, or between a vehicle and any entity. In addition, NR-system-based V2X links that are currently being researched by 3GPP or that are researched in subsequent releases are also included.

Embodiments of this application provide a sidelink communication method and an apparatus. The method and the apparatus in this application are based on a same technical concept. Because problem-resolving principles of the method and the apparatus are similar, mutual reference may be made to implementation of the apparatus and the method, and repeated parts are not described. In descriptions of this application, words such as "first" and "second" are merely used for distinguishing between descriptions, and cannot be understood as an indication or implication of relative importance, or cannot be understood as an indication of implication of an order.

In descriptions of this application, "at least one (type)" means one or more (types), and "a plurality of (types)" means two or more (types).

In descriptions of this application, unless otherwise specified, "/" means "or", for example, A/B may mean "A or B"; "and/or" used herein is only used to describe an association relationship between associated objects, and indicates that three relationships may exist. For example, "A and/or B" may indicate the following: Only A exists, both A and B exist, and only B exists. In addition, in descriptions of embodiments of this application, "a plurality of" means two or more. To describe the technical solutions in embodiments of this application more clearly, the following describes the sidelink communication method and the apparatus according to embodiments of this application in detail with reference to the accompanying drawings.

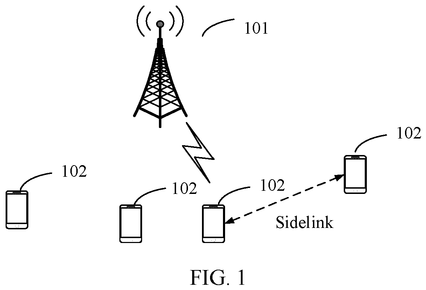

FIG. 1 shows a diagram of a network architecture of a communication system according to an embodiment of this application. The communication system may include a network device 101 and one or more terminal devices 102. It should be understood that the communication system may include more or fewer network devices or terminal devices. The network device or the terminal device may be hardware, or may be functional software, or may be a combination of hardware and software. In addition, a plurality of terminal devices 102 may also form a communication system. The network device or the terminal device may communicate with each other by using another device or a network element. The network device 101 may send downlink data to the terminal device 102, or may receive uplink data sent by the terminal device 102. Certainly, the terminal device 102 may also send uplink data to the network device 101, or may receive downlink data sent by the network device 101. The terminal devices 102 may communicate with each other, and a link for communication between the terminal devices 102 is referred to as a sidelink. Sidelink-based communication may use at least one of the following channels: a physical sidelink shared channel (physical sidelink shared channel, PSSCH) and a physical sidelink control channel (physical sidelink control channel, PSCCH).

The network device 101 is a node in a radio access network (radio access network, RAN), and may also be referred to as a base station or a RAN node (or device). Currently, some examples of the network device 101 are: a next-generation NodeB (next generation nodeB, gNB), a next-generation evolved NodeB (next generation evolved nodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), or a wireless fidelity (wireless fidelity, Wi-Fi) access point (access point, AP). The network device 101 may alternatively be a satellite or a future base station, and the satellite may also be referred to as a high-altitude platform, a high-altitude aircraft, or a satellite base station. Alternatively, the network device 101 may be a network device in a possible future communication system. In embodiments of this application, the foregoing device may be described by using a network device or a base station.

The terminal device 102 may also be referred to as user equipment (user equipment, UE), a mobile station (mobile station, MS), a mobile terminal (mobile terminal, MT), a terminal, or the like, and is a device that provides voice or data connectivity for a user. The terminal device may alternatively be an Internet of Things device. For example, the terminal device 102 includes a handheld device or a vehicle-mounted device having a wireless connection function. The terminal device 102 may be: a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a car, a bicycle, an electric car, an airplane, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or a meter), an intelligent robot, a workshop device, a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city, a wireless terminal in a smart home, a flight device (for example, an intelligent robot, a hot air balloon, an unmanned aerial vehicle, or an airplane), or the like.

In a communication scenario, when sending data to receiving UE (receiving UE, RxUE), transmitting UE (transmitting UE, TxUE) needs to first determine a modulation and coding scheme (modulation and coding scheme, MCS) used for transmitting the data. In an existing SL communication scenario, the TxUE determines, based on a channel quality indicator (channel quality indicator, CQI) included in channel state information (channel state information, CSI) previously reported or most recently reported by the RxUE, an MCS for next transmission. In current NR SL communication, only aperiodic CSI measurement report for a unicast service is supported. A channel state information reference signal (channel state information reference signal, CSI-RS) is a pseudo-random sequence generated based on cyclic redundancy check (cyclic redundancy check, CRC) initialization. A CSI-RS can be sent only with a PSSCH. In other words, when the TxUE needs the RxUE to perform CSI measurement report, sidelink control information (sidelink control information, SCI) for scheduling a PSSCH is used by the TxUE to carry a CSI triggering indication, and a CSI-RS is sent on a physical resource block (physical resource block, PRB) where the PSSCH is located. After receiving the CSI triggering indication, the RxUE performs CSI measurement in the PRB where the PSSCH is located, and then reports a measurement result CSI to the TxUE.

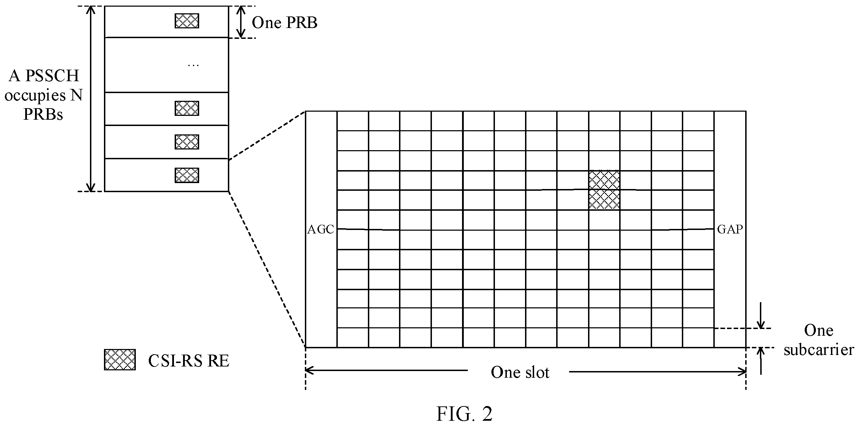

As shown in FIG. 2, it is assumed that a PSSCH sent by the TxUE occupies N PRBs, and one PRB includes 12 subcarriers in frequency domain. One slot (slot) includes 14 symbols in time domain, and the symbol may be an orthogonal frequency division multiplexing (orthogonal frequency division multiplexing, OFDM) symbol or a discrete fourier transform spread orthogonal frequency division multiplexing (discrete fourier transform spread orthogonal frequency division multiplexing, DFT-S-OFDM) symbol. A resource element (resource element, RE) occupies one symbol in time domain, and occupies one subcarrier in frequency domain. A CSI-RS sequence is mapped to N PRBs where the PSSCH is located. When a quantity of transmission antenna ports of the TxUE is 1, the CSI-RS occupies one RE in each PRB. When the quantity of transmission antenna ports of the TxUE is 2, the CSI-RS occupies two REs in each PRB. When receiving the PSSCH, the RxUE may perform CSI measurement on a resource corresponding to the CSI-RS. The RxUE may calculate a signal to interference plus noise ratio (signal to interference plus noise ratio, SINR) based on the CSI-RS sent by the TxUE, further determine a CQI based on the SINR, and report a measurement result to the TxUE. In this way, the TxUE may determine, based on the CQI reported by the RxUE, an MCS used for next transmission.

A terminal device that performs sidelink communication needs to first obtain a sidelink communication resource. A resource used for sidelink communication is usually a preconfigured resource, for example, a resource preconfigured by a network device or preconfigured before delivery. Resources used for sidelink communication are usually referred to as a resource pool (resource pool). The resource pool includes a time-frequency resource that can be used for sidelink transmission. Generally, a sidelink resource allocation mode may include the following two types. Mode 1: A network control mode. To be specific, a network device needs to allocate resources for sidelink communication performed by a terminal device.

Mode 2: A distributed mode. A network device does not need to allocate resources for sidelink communication performed by a terminal device. The terminal device selects a sidelink resource from a preconfigured resource pool.

For a terminal device that is in cellular-network coverage (in-coverage), the network control mode and/or the distributed mode may be used. For a terminal device that is out of cellular-network coverage (out-of-coverage), only the distributed mode can be used. In an SL distributed resource allocation manner, when the TxUE needs to send data to the RxUE, a sidelink time-frequency resource used for transmission may be selected through resource sensing (sensing), to avoid, as much as possible, selection of a same time-frequency resource selected by another TxUE. Specifically, during resource sensing, the TxUE needs to perform blind detection of a PSCCH of another TxUE in a resource sensing window (sensing window); determines, based on a detected PSCCH, a resource reserved by another TxUE; measures interference between the TxUE and the another TxUE; and selects, for transmission, a resource that is not reserved by the another TxUE or that is reserved by the another TxUE and on which interference is less than a threshold.

Because the resources in the resource pool are limited, when there are a large quantity of users, regardless of whether the network control mode or the distributed mode is used, a case in which different TxUE uses a same time-frequency resource for transmission cannot be avoided. Transmission performed by different TxUE on a same time-frequency resource may also be referred to as collision. When service periods of different TxUE are different or are not in a multiplicative relationship, one TxUE may collide with different TxUE in different transmission periods. Consequently, RxUE on a target link of the TxUE receives interference of different strengths in the different periods, that is, SINRs of the RxUE in different periods may differ greatly. In this case, when the TxUE determines, based on CSI previously reported by the RxUE, an MCS used for next transmission, there is a problem of inaccurate measurement. Consequently, transmission performance is poor.

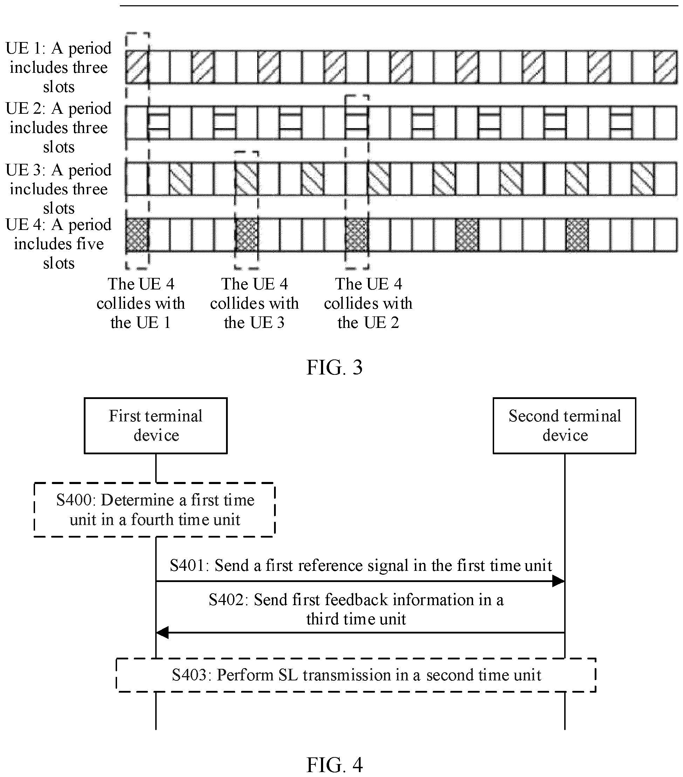

As shown in FIG. 3, it is assumed that all service periods of UE 1, UE 2, and UE 3 are three slots, and a service period of UE 4 is five slots. Even if the UE 1, UE 2, and UE 3 may select orthogonal time-frequency resources for transmission, the UE 4 cannot select a time-frequency resource orthogonal to time-frequency resources of the other UE. Because the service periods of the UE 4 and the other UE are different, the UE 4 collides with different UE in each period. For example, the UE 4 collides with the UE 1 in a 1st period, collides with the UE 3 in a 2nd period, and collides with the UE 2 in a 3rd period. As a result, SINRs measured by a target receiving UE of the UE 4 in different periods may differ greatly. If the UE 4 selects, based on CSI measured by the target receiving UE in the 1st period, an MCS used for transmission in the 2nd period or the 3rd period, MCS selection is inaccurate. In this case, transmission performance is poor.

Based on this, this application proposes a sidelink communication method and an apparatus. An association relationship between a time unit for data transmission and a time unit for sending a reference signal used for channel measurement is established, so that a receiving end device can perform channel measurement before data transmission, and report feedback information of channel measurement. In this way, accurate link adaptation is enabled, and data transmission performance is improved.

For example, a resource used for transmitting the CSI-RS may be preconfigured, and an association relationship between the resource used for transmitting the CSI-RS and a PSSCH resource is established, so that the RxUE can perform CSI measurement report before the TxUE performs data transmission. In this case, an accurate MCS can be selected when service periods of different UE are different, especially, when the periods are not integer multiples of one another. This brings high throughput gains.

It should be noted that this application may be applied to a scenario in which any two devices (a first device and a second device) in a communication system communicate with each other. For example, the first device may be the network device 101 shown in FIG. 1, and the second device may be the terminal device 102 shown in FIG. 1. For another example, both the first device and the second device may be the terminal device 102 shown in FIG. 1. In embodiments shown below, for ease of understanding and description, methods provided in embodiments of this application are described in detail by using an example in which the first terminal device and the second terminal device communicate with each other. For example, the first terminal device and the second terminal device may be the terminal device 102 in FIG. 1.

The methods and related apparatus provided in embodiments of this application are described below in detail with reference to the accompanying drawings. It should be noted that a presentation sequence of embodiments of this application merely represents a sequence of the embodiments, but does not represent superiority or inferiority of the technical solutions provided in the embodiments.

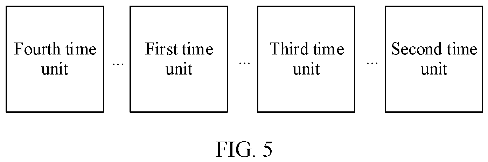

Based on the foregoing descriptions, an embodiment of this application provides a sidelink communication method applicable to the communication system shown in FIG. 1. As shown in FIG. 4 and FIG. 5, the method may include, but is not limited to, the following steps.

S401: A first terminal device sends, in a first time unit, a first reference signal used for channel measurement to a second terminal device. Correspondingly, the second terminal device receives, in the first time unit, the first reference signal sent by the first terminal device.

The first time unit is associated with or has a mapping relationship with a second time unit, and the first time unit is before the second time unit in which the first terminal device and the second terminal device perform SL transmission.

Specifically, the first terminal device sends the first reference signal to the second terminal device on a first resource, where the first resource is located in the first time unit. The first terminal device and the second terminal device perform SL transmission on a second resource, where the second resource is located in the second time unit. Therefore, that the first time unit is associated with (in other words, has an association relationship with) or has a mapping relationship with the second time unit may also be understood as that the first resource is associated with or has a mapping relationship with the second resource.

For example, the association relationship between the first time unit and the second time unit may be preconfigured by a resource pool or configured by a network device.

S402: The second terminal device sends first feedback information to the first terminal device in a third time unit. Correspondingly, the first terminal device receives, in the third time unit, the first feedback information sent by the second terminal device.

The first feedback information is determined by the second terminal device based on the first reference signal. The first feedback information is used by the first terminal device to determine a parameter for SL transmission with the second terminal device in the second time unit. The third time unit is after the first time unit, and the third time unit is before the second time unit.

In an implementation, before step S402, the method further includes: The second terminal device determines the first feedback information based on the first reference signal.

For example, a resource used by the second terminal device to send the first feedback information may be scheduled by the network device, or the second terminal device may select, based on a distributed mode, a resource used to send the first feedback information, or a resource used by the second terminal device to send the first feedback information is preconfigured by the resource pool or configured by the network device, or there is an association relationship or a mapping relationship between a resource used by the second terminal device to send the first feedback information and a resource used by the first terminal device to send the first reference signal (which may also be understood as that the third time unit is associated with the first time unit). For example, a time interval between a resource used by the second terminal device to send the first feedback information and a resource used by the first terminal device to send the first reference signal is a fixed value.

Optionally, the first feedback information may be carried in radio resource control (radio resource control, RRC) signaling, a medium access control layer control element (medium access control layer control element, MAC CE), or SCI.

S403: The first terminal device and the second terminal device perform SL transmission in the second time unit.

In some embodiments, the first terminal device is TxUE, the second terminal device is RxUE, and the first terminal device sends a PSSCH and/or a PSCCH to the second terminal device in the second time unit. For example, the parameter for SL transmission between the first terminal device and the second terminal device in the second time unit may include at least one of the following: a modulation and coding scheme MCS, channel quality information CQI, transmit power of the first terminal device, a quantity of transport streams for SL transmission between the first terminal device and the second terminal device, and a rank indicator (rank indicator, RI) for SL transmission between the first terminal device and the second terminal device.

In an implementation, as shown in FIG. 4 and FIG. 5, before step S401, that is, before the first terminal device sends the first reference signal to the second terminal device in the first time unit, the method further includes:
S400: The first terminal device determines the first time unit.

Specifically, the first terminal device may first determine, in a fourth time unit, the second time unit used by the first terminal device to perform SL transmission with the second terminal device, and then the first terminal device determines the first time unit based on the second time unit and the association relationship between the second time unit and the first time unit. The fourth time unit is before the first time unit.

In some embodiments, the first terminal device may determine, in a network control mode or a distributed mode, a time-frequency resource (that is, the second resource) used for SL transmission. In the network control mode, the second resource used by the first terminal device for SL transmission may be scheduled by the network device. In the distributed mode, the first terminal device may select the second resource used for SL transmission, or the first terminal device may select, based on auxiliary information sent by another device, the second resource used for SL transmission. A manner in which the first terminal device determines the second resource is not limited in this application.

For example, the time unit (for example, the first time unit, the second time unit, the third time unit, or the fourth time unit) in embodiments of this application may be a slot, a mini-slot, a subframe, or the like, and a frequency domain unit may be a subchannel, a sub-band, a bandwidth part (bandwidth part, BWP), a carrier, a component carrier (component carrier, CC), or the like. In a possible implementation, that the first time unit is associated with the second time unit specifically includes: The first time unit is associated with N time units, where $0 < N \leq M$, both N and M are positive integers, the second time unit is an $i^{th}$ time unit in the N time units, and $0 \leq i < N$. An index range of REs in each physical resource block PRB in a $j^{th}$ frequency domain unit on a first resource that corresponds to a $j^{th}$ frequency domain unit of the second time unit is $[i*N_{REset}, (i+1)*N_{REset}-1]$, where $N_{REset} = \lfloor 12/M \rfloor$. In other words, a resource in the $j^{th}$ frequency domain unit of the second time unit is associated with a resource in the $j^{th}$ frequency domain unit of the first time unit. Alternatively, an index range of PRBs on a first resource that corresponds to a $j^{th}$ frequency domain unit of the second time unit is $[(i+j*M)*N_{PRBset}, (i+1+j*M)*N_{PRBset}-1]$, where $N_{PRBset} = \lfloor N_{PRB}/(N_{subCH} * M) \rfloor$, $0 \leq j < N_{subCH}$, $N_{subCH}$ is a quantity of frequency domain units in the resource pool, and $N_{PRB}$ is a quantity of PRBs included in the first resource.

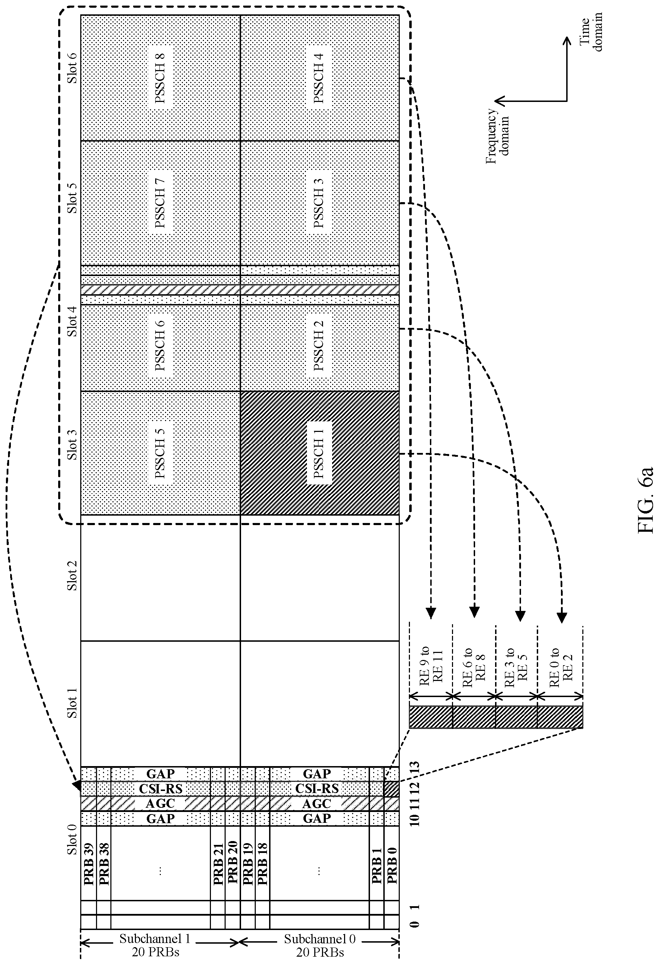

For example, the first reference signal is a CSI-RS, both the first time unit and the second time unit are slots, and the frequency domain unit is a subchannel. FIG. 6a to FIG. 6d provide two association manners between the first time unit and the second time unit as examples.

Manner 1: As shown in FIG. 6a, for example, both a subchannel 0 and a subchannel 1 include 20 PRBs. PRB indexes of the subchannel 0 are a PRB 0, a PRB 1, a PRB 2, ..., and a PRB 19. PRB indexes of the subchannel 1 are a PRB 20, a PRB 21, a PRB 22, ..., and a PRB 39. For example, the first time unit is a slot 0, and M=N=4. Resources of the subchannel 0 and the subchannel 1 of a $12^{th}$ symbol in the slot 0 are resources for sending CSI-RSs (namely, first resources or CSI-RS resources), and resources corresponding to a slot 3 to a slot 6 are resources for sending PSSCHs. For example, a resource of the subchannel 0 in the slot 3 is a resource for sending a PSSCH 1 (namely, a PSSCH 1 resource), a resource of the subchannel 1 in the slot 3 is a resource for sending a PSSCH 5 (namely, a PSSCH 5 resource), a resource of the subchannel 0 in the slot 4 is a resource for sending a PSSCH 2 (namely, a PSSCH 2 resource), and a resource of the subchannel 1 in the slot 4 is a resource for sending a PSSCH 6 (namely, a PSSCH 6 resource). The index range of the REs in each physical resource block PRB in the $j^{th}$ frequency domain unit on the first resource that corresponds to the $j^{th}$ frequency domain unit of the second time unit is $[i*N_{REset}, (i+1)*N_{REset}-1]$, where $N_{REset}$ represents a quantity of REs in each physical resource block PRB on the first resource that corresponds to the $j^{th}$ frequency domain unit of the second time unit, and $N_{REset} = \lfloor 12/M \rfloor = 3$.

For example, when the second time unit is the slot 3, the slot 3 is a $0^{th}$ slot in the four slots (the slot 3 to the slot 6) associated with the slot 0, that is, i=0. Further, when j=0, a $0^{th}$ frequency domain unit is the subchannel 0, the second resource is the PSSCH 1 resource, and an index range of REs in each PRB of the subchannel 0 on a first resource that corresponds to the $0^{th}$ frequency domain unit in the slot 3 is [0, 2]. For example, the subchannel 0 in the slot 3 corresponds to an RE 0 to an RE 2 in the PRB 0, an RE 0 to an RE 2 in the PRB 1, ..., and an RE 0 to an RE 2 in the PRB 19 on the first resource. Similarly, when j=1, a $1^{st}$ frequency domain unit is the subchannel 1, the second resource is the PSSCH 5 resource, and an index range of REs in each PRB of the subchannel 1 on a first resource that corresponds to the $1^{st}$ frequency domain unit in the slot 3 is [0, 2]. For example, the subchannel 1 in the slot 3 corresponds to an RE 0 to an RE 2 in a PRB 20, an RE 0 to an RE 2 in the PRB 21, ..., and an RE 0 to an RE 2 in the PRB 39 on the first resource.

For another example, when the second time unit is the slot 4, the slot 4 is a $1^{st}$ slot in the four slots (the slot 3 to the slot 6) associated with the slot 0, that is, i=1. Further, when j=0, the $0^{th}$ frequency domain unit is the subchannel 0, the second resource is the PSSCH 2 resource, and an index range of REs in each PRB of the subchannel 0 on the first resource that corresponds to the $0^{th}$ frequency domain unit in the slot 4 is [3, 5]. For example, the subchannel 0 in the slot 4 corresponds to an RE 3 to an RE 5 in the PRB 0, an RE 3 to an RE 5 in the PRB 1, ..., and an RE 3 to an RE 5 in the PRB 19 on the first resource. Similarly, when j=1, the $1^{st}$ frequency domain unit is the subchannel 1, the second resource is the PSSCH 6 resource, and an index range of REs in each PRB of the subchannel 1 on the first resource that corresponds to the $1^{st}$ frequency domain unit in the slot 4 is [3, 5]. For example, the subchannel 1 in the slot 4 corresponds to an RE 3 to an RE 5 in the PRB 20, an RE 3 to an RE 5 in the PRB 21, ..., and an RE 3 to an RE 5 in the PRB 39 on the first resource.

It may also be understood that, in each PRB of the corresponding subchannels on associated CSI-RS resources, the index range of the REs corresponding to the PSSCH 1 resource and the index range of the REs corresponding to the PSSCH 5 resource of the slot 3 are [0, 2], and in each PRB of the corresponding subchannels on associated CSI-RS resources, the index range of the REs corresponding to the PSSCH 2 resource and the index range of the REs corresponding to the PSSCH 6 resource of the slot 4 are [3, 5].

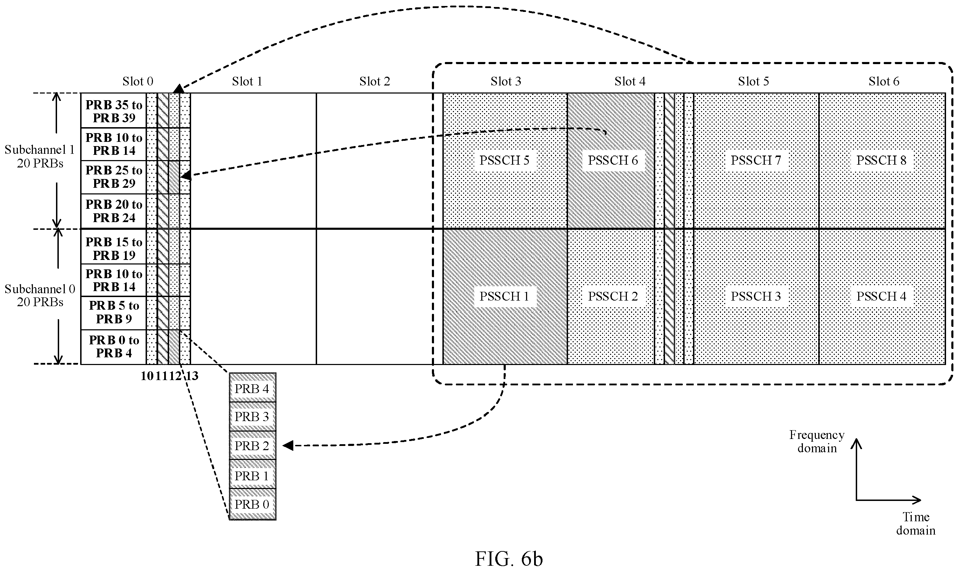

Manner 2: As shown in FIG. 6b, for example, both a subchannel 0 and a subchannel 1 include 20 PRBs. PRB indexes of the subchannel 0 are a PRB 0, a PRB 1, a PRB 2, ..., and a PRB 19. PRB indexes of the subchannel 1 are a PRB 20, a PRB 21, a PRB 22, ..., and a PRB 39. Similarly, for example, the first time unit is a slot 0, and N=M=4. Resources corresponding to the subchannel 0 and the subchannel 1 of a $12^{th}$ symbol in the slot 0 are resources for sending CSI-RSs (namely, first resources or CSI-RS resources), and resources corresponding to a slot 3 to a slot 6 are resources for sending PSSCHs. For example, a resource of the subchannel 0 in the slot 3 is a resource for sending a PSSCH 1 (namely, a second resource or a PSSCH 1 resource), a resource of the subchannel 1 in the slot 3 is a resource for sending a PSSCH 5 (namely, a PSSCH 5 resource), a resource of the subchannel 0 in the slot 4 is a resource for sending a PSSCH 2 (namely, a PSSCH 2 resource), and a resource of the subchannel 1 in the slot 4 is a resource for sending a PSSCH 6 (namely, a PSSCH 6 resource). An index range of PRBs on a first resource that corresponds to a $j^{th}$ frequency domain unit of the second time unit is $[(i+j*M)*N_{PRBset}, (i+1+j*M)*N_{PRBset}-1]$, where $0 \leq j < N_{subCH}$, $N_{subCH}$ is a quantity of frequency domain units in the resource pool, that is, $N_{subCH}$ is a quantity of subchannels 2, $N_{PRB}$ is a quantity of PRBs included in the first resource, that is, $N_{PRB}$ is 40, and

$$N_{PRBset} = \lfloor N_{PRB}/(N_{subCH} * M) \rfloor = 5$$

.
The quantity of PRBs included in the first resource may be equal to a quantity of PRBs included in the resource pool, or may be less than the quantity of PRBs included in the resource pool. For example, the quantity of PRBs included in the first resource may be indicated by a bitmap (bitmap). For example, in a bitmap whose length is 40, if an $m^{th}$ bit is 1, it indicates that an $m^{th}$ PRB in the resource pool is a PRB that can be used to send the first reference signal. If the $m^{th}$ bit is 0, it indicates that the $m^{th}$ PRB in the resource pool is not a PRB used to send the first reference signal. The bitmap may be preconfigured by the resource pool or configured by the network device.

For example, when the second time unit is the slot 3, the slot 3 is a $0^{th}$ slot in the four slots (the slot 3 to the slot 6) associated with the slot 0, that is, i=0. Further, when j=0, a $0^{th}$ frequency domain unit is the subchannel 0, the second resource is the PSSCH 1 resource, and an index range of PRBs on a first resource that corresponds to the $0^{th}$ frequency domain unit in the slot 3 is [0, 4]. For example, the subchannel 0 in the slot 3 corresponds to a PRB 0 to a PRB 4 on a first resource that corresponds to the subchannel 0. Similarly, when j=1, a $1^{st}$ frequency domain unit is the subchannel 1, the second resource is the PSSCH 5 resource, and an index range of PRBs on a first resource that corresponds to the $1^{st}$ frequency domain unit in the slot 3 is [20, 24]. For example, the subchannel 1 in the slot 4 corresponds to a PRB 20 to a PRB 24 on the first resource.

For another example, when the second time unit is the slot 4, the slot 4 is a $1^{st}$ slot in the four slots (the slot 3 to the slot 6) associated with the slot 0, that is, i=1. Further, when j=0, a $0^{th}$ frequency domain unit is the subchannel 0, the second resource is the PSSCH 2 resource, and an index range of PRBs on the first resource that corresponds to the $0^{th}$ frequency domain unit in the slot 4 is [5, 9]. For example, the subchannel 0 in the slot 4 corresponds to a PRB 5 to a PRB 9 on the first resource that corresponds to the subchannel 0. Similarly, when j=1, a $1^{st}$ frequency domain unit is the subchannel 1, the second resource is the PSSCH 6 resource, and an index range of PRBs on the first resource that corresponds to the $1^{st}$ frequency domain unit in the slot 4 is [25, 29]. For example, the subchannel 1 in the slot 4 corresponds to a PRB 25 to a PRB 29 on the first resource. In some embodiments, the first time unit is associated with the N time units, where $0 < N \leq M$, and both N and M are positive integers. In other words, there is one first resource in every M time units, or there is one first reference signal transmission opportunity in every M time units, or a first time unit in which the first resource is located is associated with a maximum of M time units. Optionally, the maximum quantity of time units (that is, a value of M) associated with the first time unit may be preconfigured by the resource pool or configured by the network device.

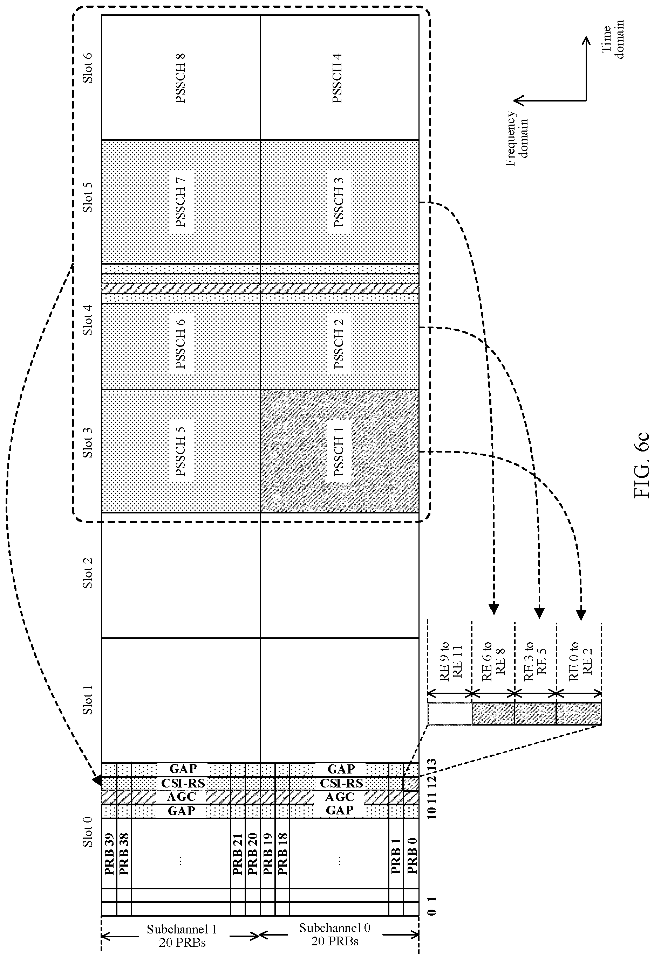

With reference to FIG. 6a, M=4, to be specific, one first resource exists in every four slots (for example, the slot 3 to the slot 6). When N=M=4, the first time unit (the slot 0) is associated with four time units (the slot 3 to the slot 6), and all REs (an RE 0 to an RE 11) in each PRB corresponding to the 12$^{th}$ symbol in the slot 0 may be used to send the CRI-RS. When N<M=4, for example, as shown in FIG. 6c, when N=3, the slot 0 is associated with three slots (the slot 3 to the slot 5), and some REs (an RE 0 to an RE 8) in each PRB corresponding to the 12$^{th}$ symbol in the slot 0 may be used to send the CRI-RS.

With reference to FIG. 6b, when M=4, one first resource exists in every four slots (for example, the slot 3 to the slot 6). When N=M=4, the first time unit (the slot 0) is associated with four time units (the slot 3 to the slot 6), and all PRBs (the PRB 0 to the PRB 39) corresponding to the subchannel 0 and the subchannel 1 of the 12$^{th}$ symbol in the slot 0 may be used to send the CRI-RS. Similarly, when N<M=4, some PRBs corresponding to the subchannel 0 and the subchannel 1 on the 12$^{th}$ symbol in the slot 0 may be used to send the CRI-RS.

In some embodiments, the first resource may be a periodic resource. Optionally, a period of the first resource may be preconfigured by the resource pool or configured by the network device. When the first resource is a periodic resource, the period of the first resource may be the M time units, or a maximum quantity of time units associated with the first time unit may be M. In this case, an index value of the first time unit is k, k mod M=$k_1$, M is an integer greater than or equal to 0, k is an integer greater than or equal to 0, and $k_1$ is an integer greater than or equal to 0 and less than M. A value of $k_1$ may be preconfigured. With reference to FIG. 6a and FIG. 6b, M=4, that is, the period of the first resource is four slots. For example, when ki=0, the index value of the first time unit may be 0, 4, 8, 12, ... For another example, when $k_1$=1, the index value of the first time unit may be 1, 5, 9, 13...

In a possible implementation, the first terminal device may send the first reference signal to the second terminal device on at least one RE included in the first resource. The at least one RE (or referred to as a position of the at least one RE) may be determined based on a source address (identity, ID) and/or a target address of the first terminal device. Specifically, which REs in an RE set or which PRBs in a PRB set are used to send the first reference signal may be determined based on the source address and/or the target address of the first terminal device. For example, the source address in this embodiment of this application may be a layer 1 (layer 1) or layer 2 (layer 2) source address corresponding to a service of SL transmission between the first terminal device and the second terminal device, or an address that is configured by a higher layer and that is used to identify the first terminal device; and the target address may be a layer 1 or layer 2 target address corresponding to the service of SL transmission between the first terminal device and the second terminal device, or an address that is configured by a higher layer and that is used to identify the second terminal device.

With reference to FIG. 6a, each PSSCH resource corresponds to one RE set on an associated CSI-RS resource, and the RE set includes $N_{REset} = \lfloor 12/M \rfloor = 3$ REs in each PRB. For example, the subchannel 0 of the slot 3 corresponds to the RE 0 to the RE 2 in the PRB 0, the RE 0 to the RE 2 in PRB 1, ..., and the RE 0 to the RE 2 in the PRB 19 on the first resource. In other words, an RE set corresponding to the PSSCH 1 resource on an associated CSI-RS resource includes an RE 0 to an RE 2 in each PRB of the subchannel 0. In this case, a position of the RE for sending the CSI-RS may be determined based on the source address and/or the target address of the first terminal device. For example, when the first terminal device sends the CSI-RS through one antenna port (port), a CSI-RS sequence is mapped to one RE resource in each PRB. For example, a position index of an RE that is for sending the CSI-RS and that corresponds to a port 0 in each PRB may be $RE_{port0} = (T_{ID})mod(N_{REset})$, where $T_{ID}$ is a source ID or a target ID of a sending device, and mod indicates a modulo operation. When the first terminal device sends the CSI-RS through two antenna ports, the CSI-RS sequence is mapped to two RE resources in each PRB. For example, a position index of an RE that is for sending the CSI-RS and that corresponds to a port 0 in each PRB may be $RE_{port0} = (T_{ID})mod(N_{REset} - 1)$, and a position index of an RE that is for sending the CSI-RS and that corresponds to a port 1 may be $RE_{port1} = RE_{port0} + 1$. It may be understood that the position index of the RE that is for sending the CSI-RS and that corresponds to each antenna port may alternatively be in another form. This is not limited in this application.

For example, as shown in FIG. 6a, REs in each PRB of the subchannel 1 on the CSI-RS resource corresponding to the subchannel 1 of the slot 3 include the RE 0, the RE 1, and the RE 2. Therefore, when there is one antenna port, the first terminal device may select one RE (for example, the RE 0) from the three REs to send the CSI-RS. Because one subchannel includes 20 PRBs, in this case, a length of the CSI-RS sequence on one subchannel is 20. When there are two antenna ports, the first terminal device may select two REs (for example, the RE 0 and the RE 1) from the three REs to send the CSI-RS. Because one subchannel includes 20 PRBs, in this case, a length of the CSI-RS sequence on one subchannel is 40.

With reference to FIG. 6b, each PSSCH resource corresponds to one PRB set on an associated CSI-RS resource, and each PRB set includes $N_{PRBset} = \lfloor N_{PRB}/M \rfloor = 5$ PRBs, where $N_{PRB}$ is a quantity of PRBs included in a subchannel. For example, the subchannel 0 of the slot 3 corresponds to the PRB 0 to the PRB 4 on the first resource, that is, a PRB set corresponding to the PSSCH 1 resource on the associated CSI-RS resource is the PRB 0 to the PRB 4. Optionally, the CSI-RS sequence may be mapped to all REs in a PRB set. Alternatively, the CSI-RS sequence may be mapped to some REs in a PRB set in a manner of comb-tooth mapping (in other words, mapped at an interval, mapped inconsecutively, or the like). In this case, the position of the RE for sending the CSI-RS may be determined based on the source address and/or the target address of the first terminal device. For example, a quantity of REs included in a PRB set is $N_{REpeSset} = N_{PRBset} * 12$, and an interval in comb-tooth mapping is K. In other words, the CSI-RS sequence occupies one RE in the PRB set at an interval of K REs. Optionally, a quantity of teeth is $N_K = N_{REpeSset}/K$, and a tooth index for sending the CSI-RS may be $RE_{ind} = (T_{ID})mod(N_K)$, where $T_{ID}$ is a source ID or a target ID of the sending device, and mod indicates a modulo operation. For example, when the first terminal device sends the CSI-RS through one antenna port, the CSI-RS sequence may occupy one RE in a PRB set at an interval of K1 REs, where K1 is an integer greater than or equal to 0. When the first terminal device sends the CSI-RS through two antenna ports, the CSI-RS may occupy two REs in the PRB set at an interval of K2 REs, where K2 is an integer greater than or equal to 0; or the CSI-RS may occupy one RE in the PRB set at an interval of K3 REs, and send two orthogonal CSI-RS sequences on a same time-frequency resource, where K3 is an integer greater than or equal to 0.

In some embodiments, before step S401, that is, before the first terminal device sends, to the second terminal device in the first time unit, the first reference signal used for channel measurement, the method further includes: The first terminal device generates the first reference signal. Optionally, a sequence of the first reference signal is generated based on the source address and/or the target address of the first terminal device.

In current SL communication, the CSI-RS sequence is a pseudo-random sequence generated based on PSCCH CRC initialization. In this embodiment of this application, the first reference signal may be sent before the second time unit in which the first terminal device and the second terminal device perform SL transmission. In other words, the CSI-RS may be independently sent instead of being sent together with the PSSCH and the PSCCH. In this case, it is difficult to generate the CSI-RS sequence based on PSCCH initialization. The following uses an example in which the first reference signal is a CSI-RS to describe a process in which the first terminal device generates the CSI-RS sequence based on the source address.

In a possible implementation, the CSI-RS sequence may be generated through initialization based on the source address of the first terminal device. For example, the $m^{th}$ component $r(m)$ of the CSI-RS sequence may be:

$$r(m) = \frac{1}{\sqrt{2}}\big(1 - 2c(2m)\big) + j\frac{1}{\sqrt{2}}\big(1 - 2c(2m + 1)\big)$$

Herein, c(n) satisfies the following formula:

$$c(n) = \big(x_1(n + N_c) + x_2(n + N_c)\big)mod2$$

$$x_1(n + 31) = \big(x_1(n + 3) + x_1(n)\big)mod2$$

$$x_2(n + 31) = \big(x_2(n + 3) + x_2(n + 2) + x_2(n + 1) + x_2(n)\big)mod2$$

Herein, $N_c = 1600$, an initialization parameter of a sequence $x_1(n)$ is $x_1(0) = 1$, $x_1(i) = 0$, $i = 1, 2, ..., 30$, and an initialization parameter of a sequence $x_2(n)$ is $c_{init} = \sum_{i=0}^{30} x_2(i) * 2^i$, where

$$c_{init} = \big(2^{10}\big(N_{symb}^{slot}n_{s,f}^{\mu} + l + 1\big)(2N_{ID} + 1) + N_{ID}\big)mod\ 2^{31}$$

Herein, $N_{symb}^{slot}$ is a quantity of symbols in one slot, $n_{s,f}^{\mu}$ is a slot number of a slot in which the CSI-RS resource is located in a radio frame, $l$ is a symbol position index of a CSI-RS symbol in a slot, and $N_{ID} = N_{ID}^X\ mod\ 2^{10}$, where

$$N_{ID}^X = \sum_{i=0}^{L-1} p_i * 2^{L-1-i}$$

, $L$ is a quantity of bits of the source address of the first terminal device, and $p_i$ is an $i$th bit of the source address of the first terminal device.

In another possible implementation, a Zadoff-Chu (ZC) sequence set may be generated and used as a candidate sequence set of the CSI-RS. Different ZC sequences in a candidate sequence set are orthogonal or approximately orthogonal. The first terminal device may determine an index of the CSI-RS sequence based on the source address, for example, an index $ZC_{ind} = (T_{ID})mod(N_{ZCset})$ of the CSI-RS sequence, where $T_{ID}$ is the source address of the first terminal device, and $N_{ZCset}$ is a quantity of sequences in the candidate sequence set.

In some embodiments, the first resource includes one or more symbols. In some embodiments, a last symbol before the first resource is used by the first terminal device to send a first signal, and transmit power of the first signal is equal to transmit power of each symbol used by the first terminal device to send the first reference signal. In other words, the transmit power of the last symbol before the first resource is equal to the transmit power of each symbol used by the first terminal device to send the first reference signal. Optionally, the last symbol before the first resource is used by the first terminal device to send the first reference signal to the second terminal device. In other words, the first reference signal is repeatedly sent on the last symbol before the first resource. In some other embodiments, a 1st symbol after the first resource is not used to transmit the PSSCH and/or the PSCCH.

An example in which the first reference signal is a CSI-RS is used to describe content of a symbol included in the first resource.

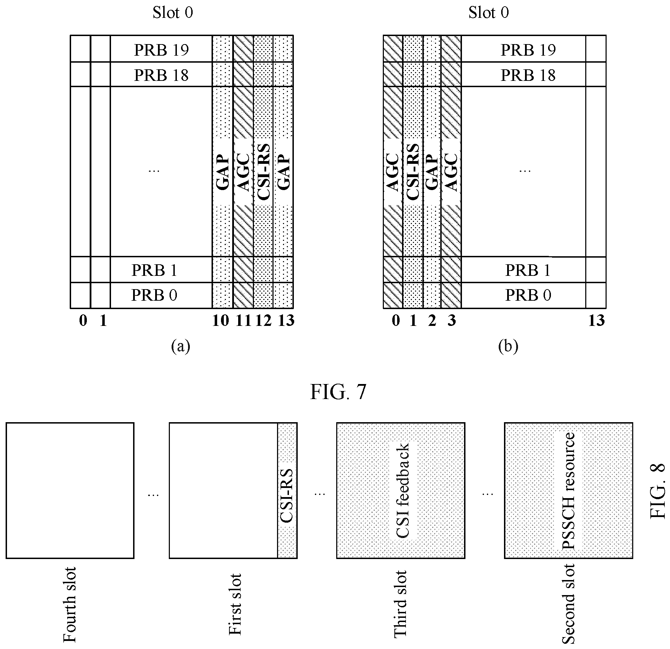

Example 1: As shown in (a) in FIG. 7, the first resource in the slot 0 includes one CSI-RS symbol (a symbol 12), and the CSI-RS symbol is used by the first terminal device to send the CSI-RS to the second terminal device. The last symbol (a symbol 11) before the CSI-RS symbol is an automatic gain control (automatic gain control, AGC) symbol, and the AGC symbol is mainly used by a receiver to perform automatic gain adjustment. The AGC symbol may be used to send content the same as that of the CSI-RS symbol. That is, the AGC symbol may also be used to send the CSI-RS. The 1st symbol (a symbol 13) after the CSI-RS symbol is a gap (gap) symbol. The gap symbol is mainly used for switching between receiving and sending. In the gap symbol, no content may be sent, that is, a 1st symbol after the CSI-RS symbol is not used for transmitting the PSSCH and/or the PSCCH. Last four symbols in the first time unit (namely, the slot 0) are respectively a gap symbol (a symbol 10), the AGC symbol (a symbol 11), the CSI-RS symbol (a symbol 12), and a gap symbol (a symbol 13).

Example 2: As shown in (b) in FIG. 7, the first resource in the slot 0 includes one CSI-RS symbol (a symbol 1). The CSI-RS symbol is used by the first terminal device to send the CSI-RS to the second terminal device. A last symbol before the CSI-RS symbol is an AGC symbol (a symbol 0), and a 1st symbol (a symbol 2) after the CSI-RS symbol is a gap symbol. First four symbols in the first time unit (namely, the slot 0) are respectively an AGC symbol (symbol 0), a CSI-RS symbol (a symbol 1), a gap symbol (a symbol 2), and an AGC symbol (a symbol 3). In this case, sending of the PSCCH and/or the PSSCH may start from a 5th symbol.

It may be understood that the content of the symbols included in the first resource may also be in another form. For example, there may be no AGC symbol before the CSI-RS symbol in (a) in FIG. 7. For another example, there may be no AGC symbol before the CSI-RS symbol in (b) in FIG. 7, or there may be no gap symbol after the CSI-RS symbol in (b) in FIG. 7. This is not limited in this application.

In some embodiments, the first time unit is a time unit that is closest to the second time unit and that is in a time unit meeting a first condition. The first condition may be that a time interval between the first time unit and the second time unit is greater than or not less than a first time interval; or the first condition may be that there are at least S time units between the first time unit and the second time unit, where S is an integer greater than or equal to 0. Optionally, the first time interval or the value of S may be preconfigured by the resource pool, or may be configured by the network device.

As described in the foregoing step S402, the second terminal device sends the first feedback information to the first terminal device in the third time unit, and the third time unit is after the first time unit and before the second time unit. Further, a time interval between the first time unit and the third time unit is greater than or not less than a sum of a minimum time required by the second terminal device to perform channel measurement and a minimum time required by the second terminal device to generate the first feedback information. A time interval between the third time unit and the second time unit is greater than or not less than a sum of a minimum time required by the first terminal device to decode the first feedback information and a minimum time required by the first terminal device to generate an SL transmission signal.

It may be understood that the first time interval is equal to a sum of a minimum time interval between the first time unit and the third time unit and a minimum time interval between the third time unit and the second time unit.

For example, the first reference signal is a first CSI-RS, the first feedback information is the first CSI, and the time unit is a slot. As shown in FIG. 8, the first terminal device determines, in a fourth slot, that the first terminal device sends a first PSSCH to the second terminal device in a second slot. Further, the first terminal device may determine a first slot based on an association relationship that is between the second slot and the first slot and that is preconfigured by the resource pool or configured by the network device, and send the first CSI-RS to the second terminal device in the first slot. After receiving the first CSI-RS sent by the first terminal device, the second terminal device may send the first CSI to the first terminal device in the third slot based on the first CSI-RS. Further, the first terminal device may determine, based on the first CSI received in the third slot, a transmission parameter of the first PSSCH that is sent by the first terminal device to the second terminal device in the second slot. For example, there are at least $N_{min1}$ slots between the third slot and the first slot, and a time of the $N_{min1}$ slots includes at least a sum of a minimum time required by the second terminal device to perform CSI measurement and a minimum time required by the second terminal device to generate the first CSI. There are at least $N_{min2}$ slots between the second slot and the third slot, and a time of the $N_{min2}$ slots includes at least a sum of a minimum time required by the first terminal device to decode the first CSI and a minimum time required by the first terminal device to generate the first PSSCH. In other words, there are at least $N_{min1}$ + $N_{min2}$ slots between the first slot and the second slot.

In a possible implementation, before step S401, that is, before the first terminal device sends, to the second terminal device in the first time unit, the first reference signal used for channel measurement, the method may further include: The first terminal device sends an activation indication or a deactivation indication to the second terminal device. The activation indication may indicate the second terminal device to perform channel measurement in advance, and the deactivation indication may indicate the second terminal device not to perform channel measurement in advance. Optionally, the activation indication/deactivation indication may be carried in RRC signaling, a MAC CE, or an SCI.

For example, when the first terminal device expects the second terminal device to perform channel measurement in advance, the first terminal device may send first indication information (an activation indication) to the second terminal device, where the first indication information indicates the second terminal device to perform channel measurement before the second time unit. For another example, the first indication information indicates the second terminal device to perform channel measurement in a time unit associated with the second time unit. Optionally, the first indication information may further indicate the first time unit, that is, indicate the second terminal device to perform channel measurement in the first time unit. For another example, the first indication information indicates the second terminal device to perform periodic channel measurement. According to the foregoing method, the first terminal device may send the indication information to the second terminal device in advance, to indicate the second device to perform channel measurement in advance.

In another possible implementation, whether the second terminal device needs to perform channel measurement in advance may be preconfigured by the resource pool, or whether the second terminal device needs to perform channel measurement in advance may be configured by the network device.

Further, if the receiving end device needs to perform channel measurement in advance, when the first terminal device expects to send the first service to the second terminal device in the second time unit, the third terminal device expects to send the second service to the first terminal device in a fifth time unit, and both the second time unit and the fifth time unit are associated with the first time unit, in other words, the first terminal device needs to send, in the first time unit, a reference signal to the second terminal device, and the first terminal device needs to receive, in the first time unit, a reference signal sent by the third terminal device, optionally, whether the first terminal device performs sending or receiving may be determined based on priorities of the services. Further, resource reselection may be triggered, so that the second time unit and the fifth time unit are associated with different time units. For example, when a priority of the first service is higher than or not lower than a priority of the second service, the first terminal device may send the reference signal to the second terminal device in the first time unit; otherwise, the first terminal device may receive, in the first time unit, the reference signal sent by the third terminal device.

For example, the reference signal is a CSI-RS. When CSI measurement is activated or enabled in advance, that is, the receiving end device needs to perform CSI measurement in advance, as shown in FIG. 8, the first terminal device determines to send the first PSSCH to the second terminal device in the second slot, and the first terminal device needs to send the CSI-RS to the second terminal device on a CSI-RS resource in the first slot because the second slot is associated with the first slot. In this case, if the third terminal device determines to send a second PSSCH to the first terminal device in the fifth slot, and the fifth slot is also associated with the first slot, the first terminal device needs to receive, on the CSI-RS resource in the first slot, the CSI-RS sent by the third terminal device. In this case, because CSI-RS sending is in conflict with CSI-RS receiving by the first terminal device in the first slot, when a priority of sending the first PSSCH by the first terminal device is higher than a priority of sending the second PSSCH by the third terminal device, it may be determined that the first terminal device sends the CSI-RS to the second terminal device on the CSI-RS resource in the first slot. Alternatively, resource reselection may be triggered, so that the second slot and the fifth slot are associated with different slots, that is, a resource for sending the first PSSCH and a resource for sending the second PSSCH are associated with different CSI-RS resources.

In some embodiments, transmit power of an RE used to send the first reference signal in the first resource is equal to transmit power of an RE used for SL transmission in the second resource; or total transmit power of all REs in each symbol used to send the first reference signal in the first resource is equal to total transmit power of all REs in each symbol used for SL transmission in the second resource.

For example, as shown in FIG. 8, if the first terminal device determines, in the fourth slot, to send a PSSCH to the second terminal device on a PSSCH resource in the second slot, and a CSI-RS resource associated with the PSSCH resource is located in the first slot, the first terminal device sends the CSI-RS to the second terminal device in the first slot. Specifically, transmit power of each RE used to send the CSI-RS on the CSI-RS resource is equal to transmit power of each RE on the PSSCH resource. Alternatively, total transmit power of all REs in each symbol used to send the CSI-RS on the CSI-RS resource is equal to total transmit power of all REs in each symbol on the PSSCH resource.

Further, different transmitting end devices that select a same time-frequency resource for data transmission send CSI-RSs in advance in a same slot. For example, an association relationship between a PSSCH resource and a CSI-RS resource (or an association relationship between the first slot and the second slot) is configured, so that all transmitting end devices that select the PSSCH resource in the second slot for data transmission send CSI-RSs in the first slot. In this case, an SINR obtained by the receiving end device through measurement by using the CSI-RS resource can accurately reflect an actual SINR during data transmission, thereby improving accuracy of CSI reported by the receiving end device, and enabling the transmitting end device improves link adaptation.

It should be noted that the foregoing embodiment is described by using an example in which the first reference signal is the CSI-RS and the first feedback information is the CSI. It may be understood that the first reference signal in this application may be another reference signal used for channel measurement, and correspondingly, the first feedback information may be another type of signal. This example does not constitute a limitation on the protection scope of this application. It should be further noted that, in the foregoing embodiment, an example in which a CSI-RS resource, a CSI feedback resource, and a PSSCH resource are on a same carrier is used for description. When the device may perform sending or receiving on a plurality of carriers, the CSI-RS resource, the CSI feedback resource, and the PSSCH resource may also be on different carriers. In other words, the reference signal resource, the resource for sending the feedback information, and the SL transmission resource may be on a same carrier or different carriers. This is not limited in this application.

In the foregoing embodiments, an example in which the first device and the second device are terminal devices is used for description. However, this does not constitute a limitation on the protection scope of this application. It may be understood that the first device may alternatively be a network device. When the network device communicates with the terminal device, for example, the first reference signal may be a CSI-RS, or the first reference signal may be a channel sounding reference signal (sounding reference signal, SRS). Optionally, the association relationship between the first time unit and the second time unit may be configured by the network device.

According to the method provided by embodiments of this application, an association relationship between a time unit for data transmission and a time unit for sending a reference signal used for channel measurement is established, so that a receiving end device can perform channel measurement before data transmission, and report feedback information of channel measurement. In this way, accurate link adaptation is enabled, and data transmission performance is improved. It may be understood that, to implement the functions in the foregoing embodiments, the terminal device includes a corresponding hardware structure and/or a corresponding software module for performing each function. A person skilled in the art should be easily aware that, with reference to units and method steps in the examples described in embodiments disclosed in this application, this application can be implemented in a form of hardware or a combination of hardware and computer software. Whether a function is performed by hardware or hardware driven by computer software depends on particular application scenarios and design constraints of the technical solutions.

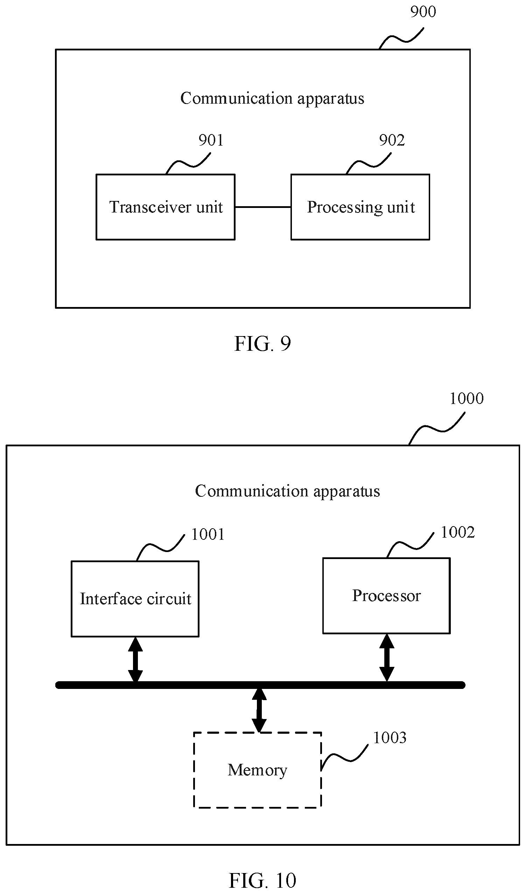

FIG. 9 and FIG. 10 are diagrams of structures of possible communication apparatuses according to embodiments of this application. The communication apparatuses may be configured to implement functions of the terminal device in the foregoing method embodiments, and therefore can also implement beneficial effects of the foregoing method embodiments. In this embodiment of this application, the communication apparatus may be a terminal device, or may be a module (for example, a chip) applied to the terminal device.

As shown in FIG. 9, a communication apparatus 900 includes a transceiver unit 901 and a processing unit 902. The processing unit 902 is configured to invoke the transceiver unit 901 to receive information from another communication apparatus or send information to another communication apparatus. The transceiver unit 901 may further include a receiving unit and a sending unit. The receiving unit is configured to receive information from another communication apparatus, and the sending unit is configured to send information to the another communication apparatus. The communication apparatus 900 is configured to implement the functions of the first terminal device or the second terminal device in the method embodiment shown in FIG. 4.

When the communication apparatus 900 is configured to implement the functions of the first terminal device in the method embodiment shown in FIG. 4, the transceiver unit 901 is configured to send, in a first time unit, a first reference signal used for channel measurement to a second terminal device, where the first time unit is associated with a second time unit, the first time unit is before the second time unit, and the second time unit is a time unit in which the first terminal device and the second terminal device perform SL transmission; and the transceiver unit 901 is further configured to receive, in a third time unit, first feedback information sent by the second terminal device, where the first feedback information is determined by the second terminal device based on the first reference signal, the first feedback information is used by the first terminal device to determine a parameter for SL transmission with the second terminal device in the second time unit, the third time unit is after the first time unit, and the third time unit is before the second time unit. The processing unit 902 is configured to: determine the second time unit in a fourth time unit, and determine the first time unit based on the second time unit and an association relationship between the second time unit and the first time unit, where the fourth time unit is before the first time unit.

When the communication apparatus 900 is configured to implement the functions of the second terminal device in the method embodiment shown in FIG. 4, the transceiver unit 901 is configured to receive, in a first time unit, a first reference signal that is used for channel measurement and that is sent by the first terminal device, where the first time unit is associated with a second time unit, the first time unit is before the second time unit, and the second time unit is a time unit in which the first terminal device and the second terminal device perform SL transmission; and the transceiver unit 901 is further configured to send, in a third time unit, first feedback information to the first terminal device, where the first feedback information is determined by the second terminal device based on the first reference signal, the first feedback information is used by the first terminal device to determine a parameter for SL transmission with the second terminal device in the second time unit, the third time unit is after the first time unit, and the third time unit is before the second time unit. The processing unit 902 is configured to determine the first feedback information based on the first reference signal.

For more detailed descriptions of the transceiver unit 901 and the processing unit 902, directly refer to related descriptions in the method embodiment shown in FIG. 4. Details are not described herein again.

Based on a same technical concept, as shown in FIG. 10, an embodiment of this application further provides a communication apparatus 1000. The communication apparatus 1000 includes an interface circuit 1001 and a processor 1002. The interface circuit 1001 and the processor 1002 are coupled to each other. It may be understood that the interface circuit 1001 may be a transceiver or an input/output interface. Optionally, the communication apparatus 1000 may further include a memory 1003, configured to store instructions executed by the processor 1002, store input data required by the processor 1002 to run the instructions, or store data generated after the processor 1002 runs the instructions.

When the communication apparatus 1000 is configured to implement the method embodiment in FIG. 4, the processor 1002 is configured to implement the functions of the processing unit 902, and the interface circuit 1001 is configured to implement the functions of the transceiver unit 901. When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device or another terminal device to the terminal device; or the chip in the terminal device sends information to another module (for example, a radio frequency module or an antenna) in the terminal device, where the information is sent by the terminal device to a network device or another terminal device.

It can be understood that the processor in this embodiment of this application may be a central processing unit (central processing unit, CPU), or may be another general-purpose processor, a digital signal processor (digital signal processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

With reference to the foregoing descriptions, this application further provides the following embodiments.

Embodiment 1. A sidelink SL communication method. The method includes:

A first terminal device sends, in a first time unit, a first reference signal used for channel measurement to a second terminal device, where the first time unit is associated with a second time unit, the first time unit is before the second time unit, and the second time unit is a time unit in which the first terminal device and the second terminal device perform SL transmission; and

the first terminal device receives, in a third time unit, first feedback information sent by the second terminal device, where the first feedback information is determined by the second terminal device based on a first reference signal, the first feedback information is used by the first terminal device to determine a parameter for SL transmission with the second terminal device in the second time unit, the third time unit is after the first time unit, and the third time unit is before the second time unit.

Embodiment 2. The method according to Embodiment 1, where before that a first terminal device sends, in a first time unit, a first reference signal used for channel measurement to a second terminal device, the method further includes:

The first terminal device determines the second time unit; and

the first terminal device determines the first time unit based on the second time unit and an association relationship between the second time unit and the first time unit.

Embodiment 3. The method according to Embodiment 1 or 2, where the first time unit being associated with the second time unit includes:

The first time unit is a time unit that is closest to the second time unit and that is in a time unit meeting a first condition, where the first condition is that a time interval between the first time unit and the second time unit is greater than or not less than a first time interval.

Embodiment 4. The method according to any one of Embodiments 1 to 3, where that a first terminal device sends, in a first time unit, a first reference signal used for channel measurement to a second terminal device includes:

The first terminal device sends the first reference signal to the second terminal device on a first resource, where the first resource is located in the first time unit.

Embodiment 5. The method according to Embodiment 4, where the first time unit being associated with the second time unit includes:

The first time unit is associated with N time units, where N is a positive integer less than or equal to M, M is a positive integer, the second time unit is an $i^{th}$ time unit in the N time units, and $0 \leq i < N$; and

an index range of resource elements REs in each physical resource block PRB in a $j^{th}$ frequency domain unit on a first resource that corresponds to a $j^{th}$ frequency domain unit of the second time unit is [i*$N_{REset}$, (i+1)*$N_{REset}$-1], where

$$N_{REset} = \lfloor 12/M \rfloor$$ ; or an index range of PRBs on a first resource that corresponds to a $j^{th}$ frequency domain unit of the second time unit is [(i+j*M)*$N_{PRBset}$, (i+1+j*M)*$N_{PRBset}$-1], where $$N_{PRBset} = \lfloor N_{PRB}/(N_{subCH} * M) \rfloor$$ ,

$0 \leq j < N_{subCH}$, $N_{subCH}$ is a quantity of frequency domain units in a resource pool, and $N_{PRB}$ is a quantity of PRBs included in the first resource.

Embodiment 6. The method according to Embodiment 4 or 5, where that the first terminal device sends the first reference signal to the second terminal device on a first resource includes:

The first terminal device sends the first reference signal to the second terminal device on at least one RE, where the first resource includes the at least one RE, and the at least one RE is determined based on a source address and/or a target address of the first terminal device.

Embodiment 7. The method according to any one of Embodiments 1 to 6, where the first resource is a periodic resource.

Embodiment 8: The method according to Embodiment 7, where an index of the first time unit is k, k mod M=k1, M is a positive integer, k is an integer greater than or equal to 0, k1 is an integer greater than or equal to 0 and less than M, and M is a period of the first resource, or M is a maximum quantity of time units associated with the first time unit.

Embodiment 9. The method according to Embodiment 8, where at least one of the following is preconfigured by the resource pool or configured by a network device:

The association relationship between the second time unit and the first time unit;

the period of the first resource;
the maximum quantity of time units associated with the first time unit; and
the first time interval.

Embodiment 10. The method according to any one of Embodiments 4 to 9, where the first resource includes one or more symbols, a last symbol before the first resource is used by the first terminal device to send a first signal, transmit power of the first signal is equal to transmit power of each symbol used by the first terminal device to send the first reference signal, and/or a 1st symbol after the first resource is not used to transmit a physical sidelink shared channel PSSCH and/or a physical sidelink control channel PSCCH.

Embodiment 11. The method according to Embodiment 10, where that a last symbol before the first resource is used by the first terminal device to send a first signal includes:

The last symbol before the first resource is used by the first terminal device to send the first reference signal to the second terminal device.

Embodiment 12. The method according to any one of Embodiments 4 to 11, where transmit power of an RE used to send the first reference signal in the first resource is equal to transmit power of an RE used for SL transmission in a second resource; or

total transmit power of all REs in each symbol used to send the first reference signal in the first resource is equal to total transmit power of all REs in each symbol used for SL transmission in a second resource.

Embodiment 13. The method according to any one of Embodiments 1 to 12, where before that a first terminal device sends, in a first time unit, a first reference signal used for channel measurement to a second terminal device, the method further includes:

The first terminal device sends first indication information to the second terminal device, where the first indication information indicates the second terminal device to perform channel measurement before the second time unit; or the first indication information indicates the second terminal device to perform channel measurement in a time unit associated with the second time unit; or the first indication information indicates the second terminal device to perform periodic channel measurement.

Embodiment 14: The method according to Embodiment 13, where the first indication information is carried in at least one of the following: radio resource control RRC signaling, a medium access control layer control element MAC CE, or sidelink control information SCI.

Embodiment 15: The method according to any one of Embodiments 1 to 12, where channel measurement performed by the second terminal device before the second time unit is configured by the resource pool or the network device, or channel measurement performed by the second terminal device in the time unit associated with the second time unit is configured by the resource pool or the network device.

Embodiment 16. The method according to any one of Embodiments 1 to 15, where the first time unit is a time unit that is determined by a third terminal device and that is for sending a second reference signal to the first terminal device, the first time unit is associated with a fifth time unit, the fifth time unit is a time unit in which the third terminal device and the first terminal device perform SL transmission, and a priority of SL transmission between the first terminal device and the second terminal device is higher than or equal to a priority of SL transmission between the third terminal device and the first terminal device.

Embodiment 17. The method according to any one of Embodiments 1 to 16, where the second time unit is a time unit in which the first terminal device and the second terminal device perform SL transmission includes:
The second time unit is a time unit in which the first terminal device sends a first physical sidelink shared channel PSSCH and/or a first physical sidelink control channel PSCCH to the second terminal device.

Embodiment 18. The method according to any one of Embodiments 1 to 17, where a time interval between the first time unit and the third time unit is greater than or not less than a sum of a minimum time required by the second terminal device to perform channel measurement and a minimum time required by the second terminal device to generate the first feedback information; and a time interval between the third time unit and the second time unit is greater than or not less than a sum of a minimum time required by the first terminal device to decode the first feedback information and a minimum time required by the first terminal device to generate the first PSSCH.

Embodiment 19. The method according to any one of Embodiments 1 to 18, where a sequence of the first reference signal is generated based on the source address and/or the target address of the first terminal device.

Embodiment 20. The method according to any one of Embodiments 1 to 19, where the parameter for SL transmission between the first terminal device and the second terminal device includes at least one of the following: a modulation and coding scheme MCS, channel quality information CQI, transmit power of the first terminal device, a quantity of transport streams for SL transmission between the first terminal device and the second terminal device, and a rank indicator RI for SL transmission between the first terminal device and the second terminal device.

Embodiment 21: The method according to any one of Embodiments 1 to 20, where the first reference signal is a channel state information reference signal CSI-RS, and the first feedback information is channel state information CSI.

Embodiment 22. The method according to any one of Embodiments 1 to 21, where the first time unit is a slot.

Embodiment 23. A sidelink communication method. The method includes:
A second terminal device receives, in a first time unit, a first reference signal used for channel measurement sent by a first terminal device, where the first time unit is associated with a second time unit, the first time unit is before the second time unit, and the second time unit is a time unit in which the first terminal device and the second terminal device perform SL transmission; and
the second terminal device sends, in a third time unit, first feedback information to the first terminal device, where the first feedback information is determined by the second terminal device based on the first reference signal, the first feedback information is used by the first terminal device to determine a parameter for SL transmission with the second terminal device in the second time unit, the third time unit is after the first time unit, and the third time unit is before the second time unit.

Embodiment 24. The method according to Embodiment 23, where the second time unit is determined by the first terminal device in a fourth time unit, the fourth time unit is before the first time unit, and the first time unit is determined by the first terminal device based on the second time unit and an association relationship between the second time unit and the first time unit.

Embodiment 25. The method according to Embodiment 23 or 24, where the first time unit being associated with the second time unit includes:
The first time unit is a time unit that is closest to the second time unit and that is in a time unit meeting a first condition, where the first condition is that a time interval between the first time unit and the second time unit is greater than or not less than a first time interval.

Embodiment 26. The method according to any one of Embodiments 23 to 25, where that a second terminal device receives, in a first time unit, a first reference signal used for channel measurement sent by a first terminal device includes:

The second terminal device receives the first reference signal sent by the first terminal device on a first resource, where the first resource is located in the first time unit.

Embodiment 27. The method according to Embodiment 26, where the first time unit being associated with the second time unit includes:

The first time unit is associated with N time units, where N is a positive integer less than or equal to M, M is a positive integer, the second time unit is an $i^{th}$ time unit in the N time units, and $0 \leq i < N$; and

an index range of resource elements REs in each physical resource block PRB in a $j^{th}$ frequency domain unit on a first resource that corresponds to a $j^{th}$ frequency domain unit of the second time unit is $[i*N_{REset}, (i+1)*N_{REset}-1]$, where

$N_{REset} = \lfloor 12/M \rfloor$ ; or an index range of PRBs on a first resource that corresponds to a $j^{th}$ frequency domain unit of the second time unit is $[(i+j*M)*N_{PRBset}, (i+1+j*M)*N_{PRBset}-1]$, where $N_{PRBset} = \lfloor N_{PRB}/(N_{subCH} * M) \rfloor$ , $0 \leq j < N_{subCH}$, $N_{subCH}$ is a quantity of frequency domain units in a resource pool, and $N_{PRB}$ is a quantity of PRBs included in the first resource.

Embodiment 28. The method according to Embodiment 26 or 27, where that the second terminal device receives the first reference signal sent by the first terminal device on a first resource includes:

The second terminal device receives the first reference signal sent by the first terminal device on at least one RE, where the first resource includes the at least one RE, and the at least one RE is determined based on a source address and/or a target address of the first terminal device.

Embodiment 29. The method according to any one of Embodiments 23 to 28, where the first resource is a periodic resource.

Embodiment 30: The method according to Embodiment 29, where an index of the first time unit is k, k mod M=k1, M is a positive integer, k is an integer greater than or equal to 0, k1 is an integer greater than or equal to 0 and less than M, and M is a period of the first resource, or M is a maximum quantity of time units associated with the first time unit.

Embodiment 31. The method according to Embodiment 30, where at least one of the following is preconfigured by the resource pool or configured by a network device:

The association relationship between the second time unit and the first time unit;

the period of the first resource;
the maximum quantity of time units associated with the first time unit; and
the first time interval.

Embodiment 32. The method according to any one of Embodiments 26 to 31, where the first resource includes one or more symbols, a last symbol before the first resource is used by the first terminal device to send a first signal, transmit power of the first signal is equal to transmit power of each symbol used by the first terminal device to send the first reference signal, and/or a $1^{st}$ symbol after the first resource is not used to transmit a physical sidelink shared channel PSSCH and/or a physical sidelink control channel PSCCH.

Embodiment 33. The method according to Embodiment 32, where that a last symbol before the first resource is used by the first terminal device to send a first signal includes:

The last symbol before the first resource is used by the first terminal device to send the first reference signal to the second terminal device.

Embodiment 34. The method according to any one of Embodiments 26 to 33, where transmit power of an RE used to send the first reference signal in the first resource is equal to transmit power of an RE used for SL transmission in a second resource; or

total transmit power of all REs in each symbol used to send the first reference signal in the first resource is equal to total transmit power of all REs in each symbol used for SL transmission in a second resource.

Embodiment 35. The method according to any one of Embodiments 23 to 34, where before that a second terminal device receives, in a first time unit, a first reference signal used for channel measurement sent by a first terminal device, the method further includes:

The second terminal device receives first indication information sent by the first terminal device, where the first indication information indicates the second terminal device to perform channel measurement before the second time unit; or the first indication information indicates the second terminal device to perform channel measurement in a time unit associated with the second time unit; or the first indication information indicates the second terminal device to perform periodic channel measurement.

Embodiment 36: The method according to Embodiment 35, where the first indication information is carried in at least one of the following: radio resource control RRC signaling, a medium access control layer control element MAC CE, or sidelink control information SCI.

Embodiment 37: The method according to any one of Embodiments 23 to 34, where channel measurement performed by the second terminal device before the second time unit is configured by the resource pool or the network device, or channel measurement performed by the second terminal device in the time unit associated with the second time unit is configured by the resource pool or the network device.

Embodiment 38. The method according to any one of Embodiments 23 to 37, where the first time unit is a time unit that is determined by a third terminal device and that is for sending a second reference signal to the first terminal device, the first time unit is associated with a fifth time unit, the fifth time unit is a time unit in which the third terminal device and the first terminal device perform SL transmission, and a priority of SL transmission between the first terminal device and the second terminal device is higher than or equal to a priority of SL transmission between the third terminal device and the first terminal device.

Embodiment 39. The method according to any one of Embodiments 23 to 38, where the second time unit is a time unit in which the first terminal device and the second terminal device perform SL transmission includes:

The second time unit is a time unit in which the first terminal device sends a first physical sidelink shared channel PSSCH and/or a first physical sidelink control channel PSCCH to the second terminal device.

Embodiment 40. The method according to any one of Embodiments 23 to 39, where a time interval between the first time unit and the third time unit is greater than or not less than a sum of a minimum time required by the second terminal device to perform channel measurement and a minimum time required by the second terminal device to generate the first feedback information; and a time interval between the third time unit and the second time unit is greater than or not less than a sum of a minimum time required by the first terminal device to decode the first feedback information and a minimum time required by the first terminal device to generate the first PSSCH.

Embodiment 41. The method according to any one of Embodiments 23 to 40, where a sequence of the first reference signal is generated based on the source address and/or the target address of the first terminal device.

Embodiment 42. The method according to any one of Embodiments 23 to 41, where the parameter for SL transmission between the first terminal device and the second terminal device includes at least one of the following: a modulation and coding scheme MCS, channel quality information CQI, transmit power of the first terminal device, a quantity of transport streams for SL transmission between the first terminal device and the second terminal device, and a rank indicator RI for SL transmission between the first terminal device and the second terminal device.

Embodiment 43: The method according to any one of Embodiments 23 to 42, where the first reference signal is a channel state information reference signal CSI-RS, and the first feedback information is channel state information CSI.

Embodiment 44. The method according to any one of Embodiments 23 to 43, where the first time unit is a slot.

Embodiment 45. A first terminal device, including one or more processors and one or more memories.

The one or more memories are coupled to the one or more processors. The one or more memories are configured to store computer program code. The computer program code includes computer instructions. When the one or more processors execute the computer instructions, the first terminal device is enabled to perform the method according to any one of embodiments 1 to 22.

Embodiment 46. A second terminal device, including one or more processors and one or more memories.

The one or more memories are coupled to the one or more processors. The one or more memories are configured to store computer program code. The computer program code includes computer instructions. When the one or more processors execute the computer instructions, the second terminal device is enabled to perform the method according to any one of embodiments 23 to 44.

Embodiment 47. A computer-readable storage medium, where the computer-readable storage medium stores computer-executable instructions; and when invoked by a computer, the computer-executable instructions are used to enable the computer to perform the method according to any one of embodiments 1 to 22 or the method according to any one of embodiments 23 to 44.

Embodiment 48. A computer program product including instructions, where when the computer program product runs on a computer, the computer is enabled to perform the method according to any one of embodiments 1 to 22 or the method according to any one of embodiments 23 to 44.

Embodiment 49. A chip, where the chip is coupled to a memory, and is configured to read and execute program instructions stored in the memory, to perform the method according to any one of embodiments 1 to 22 or the method according to any one of embodiments 23 to 44.

Based on the foregoing embodiments, an embodiment of this application provides a communication system. The communication system may include the foregoing first terminal device and second terminal device in the foregoing embodiments.

An embodiment of this application further provides a computer-readable storage medium. The computer-readable storage medium is configured to store a computer program. When the computer program is executed by a computer, the computer can implement the sidelink communication method provided in the foregoing method embodiment.

An embodiment of this application further provides a computer program product. The computer program product is configured to store a computer program. When the computer program is executed by a computer, the computer may implement the sidelink communication method provided in the foregoing method embodiments.

An embodiment of this application further provides a chip, including a processor. The processor is coupled to a memory, and is configured to invoke a program in the memory, so that the chip implements the sidelink communication method provided in the foregoing method embodiments. An embodiment of this application further provides a chip. The chip is coupled to a memory, and the chip is configured to implement the sidelink communication method provided in the foregoing method embodiments.

The method steps in embodiments of this application may be implemented by using hardware, or may be implemented in a manner of executing software instructions by the processor. The software instructions may include a corresponding software module. The software module may be stored in a random-access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may be a component of the processor. The processor and the storage medium may be in an ASIC. In addition, the ASIC may be located in a network device or a terminal device. The processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or instructions are loaded and executed on a computer, the procedures or functions according to embodiments of this application are completely or partially implemented. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, first device, or data center to another website, computer, server, first device, or data center in a wired manner or in a wireless manner. The computer-readable storage medium may be any usable medium that can be accessed by the computer, or a data storage device, for example, a first device or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid state drive, SSD).

It is clear that a person skilled in the art may make various modifications and variations to embodiments of this application without departing from the scope of embodiments of this application. This application is intended to cover these modifications and variations in embodiments of this application provided that they fall within the scope defined by the claims of this application and their equivalent technologies.

**Claims**

1. A sidelink SL communication method, wherein the method comprises:

   sending, by a first terminal device in a first time unit, a first reference signal used for channel measurement to a second terminal device, wherein the first time unit is associated with a second time unit, the first time unit is before the second time unit, and the second time unit is a time unit in which the first terminal device and the second terminal device perform SL transmission; and
   receiving, by the first terminal device in a third time unit, first feedback information sent by the second terminal device, wherein the first feedback information is determined by the second terminal device based on the first reference signal, the first feedback information is used by the first terminal device to determine a parameter for SL transmission with the second terminal device in the second time unit, the third time unit is after the first time unit, and the third time unit is before the second time unit.

2. The method according to claim 1, wherein before the sending, by a first terminal device in a first time unit, a first reference signal used for channel measurement to a second terminal device, the method further comprises:

   determining, by the first terminal device, the second time unit in a fourth time unit, wherein the fourth time unit is before the first time unit; and
   determining, by the first terminal device, the first time unit based on the second time unit and an association relationship between the second time unit and the first time unit.

3. The method according to claim 1 or 2, wherein the first time unit being associated with the second time unit comprises: the first time unit is a time unit that is closest to the second time unit and that is in a time unit meeting a first condition, wherein the first condition is that a time interval between the first time unit and the second time unit is greater than or not less than a first time interval.

4. The method according to any one of claims 1 to 3, wherein the sending, by a first terminal device in a first time unit, a first reference signal used for channel measurement to a second terminal device comprises: sending, by the first terminal device, the first reference signal to the second terminal device on a first resource, wherein the first resource is located in the first time unit.

5. The method according to claim 4, wherein the first time unit being associated with the second time unit comprises:

the first time unit is associated with N time units, wherein N is a positive integer less than or equal to M, M is a positive integer, the second time unit is an $i^{th}$ time unit in the N time units, and $0 \le i < N$; and an index range of resource elements Res in each physical resource block PRB in a $j^{th}$ frequency domain unit on a first resource that corresponds to a $j^{th}$ frequency domain unit of the second time unit is [$i^*N_{REset}$, $(i+1)^*N_{REset}$-

1], wherein $N_{REset} = \lfloor 12/M \rfloor$; or an index range of PRBs on a first resource that corresponds to a $j^{th}$ frequency domain unit of the second time unit is [$(i+j^*M)^* N_{PRBset}$, $(i+1+j^*M)^* N_{PRBset}$ -1], wherein

$$N_{PRBset} = \lfloor N_{PRB}/(N_{subCH} * M) \rfloor$$, $0 \le j < N_{subCH}$, $N_{subCH}$ is a quantity of frequency domain units in a resource pool, and $N_{PRB}$ is a quantity of PRBs comprised in the first resource.

6. The method according to claim 4 or 5, wherein the sending, by the first terminal device, the first reference signal to the second terminal device on a first resource comprises: sending, by the first terminal device, the first reference signal to the second terminal device on at least one RE, wherein the first resource comprises the at least one RE, and the at least one RE is determined based on a source address and/or a target address of the first terminal device.

7. The method according to any one of claims 1 to 6, wherein the first resource is a periodic resource.

8. The method according to claim 7, wherein at least one of the following is preconfigured by the resource pool or configured by a network device:

the association relationship between the second time unit and the first time unit; a period of the first resource; a maximum quantity of time units associated with the first time unit; or the first time interval.

9. The method according to any one of claims 4 to 8, wherein the first resource comprises one or more symbols, a last symbol before the first resource is used by the first terminal device to send a first signal, transmit power of the first signal is equal to transmit power of each symbol used by the first terminal device to send the first reference signal, and/or a $1^{st}$ symbol after the first resource is not used to transmit a physical sidelink shared channel PSSCH and/or a physical sidelink control channel PSCCH.

10. The method according to claim 9, wherein that a last symbol before the first resource is used by the first terminal device to send a first signal comprises: the last symbol before the first resource is used by the first terminal device to send the first reference signal to the second terminal device.

11. The method according to any one of claims 4 to 10, wherein transmit power of an RE used to send the first reference signal in the first resource is equal to transmit power of an RE used for SL transmission in a second resource; or total transmit power of all REs in each symbol used to send the first reference signal in the first resource is equal to total transmit power of all REs in each symbol used for SL transmission in a second resource.

12. The method according to any one of claims 1 to 11, wherein before the sending, by a first terminal device in a first time unit, a first reference signal used for channel measurement to a second terminal device, the method further comprises:
sending, by the first terminal device, first indication information to the second terminal device, wherein the first indication information indicates the second terminal device to perform channel measurement before the second time unit; or the first indication information indicates the second terminal device to perform channel measurement in a time unit associated with the second time unit; or the first indication information indicates the second terminal device to perform periodic channel measurement.

13. The method according to any one of claims 1 to 12, wherein the first time unit is a time unit that is determined by a third terminal device and that is for sending a second reference signal to the first terminal device, the first time unit is associated with a fifth time unit, the fifth time unit is a time unit in which the third terminal device and the first terminal device perform SL transmission, and a priority of SL transmission between the first terminal device and the second terminal device is higher than or equal to a priority of SL transmission between the third terminal device and the first terminal device.

14. The method according to any one of claims 1 to 13, wherein a time interval between the first time unit and the third time unit is greater than or not less than a sum of a minimum time required by the second terminal device to perform channel measurement and a minimum time required by the second terminal device to generate the first feedback information; and a time interval between the third time unit and the second time unit is greater than or not less than a sum of a minimum time required by the first terminal device to decode the first feedback information and a minimum time required by the first terminal device to generate an SL transmission signal.

15. The method according to any one of claims 1 to 14, wherein a sequence of the first reference signal is generated based on the source address and/or the target address of the first terminal device.

16. A sidelink communication method, wherein the method comprises:

receiving, by a second terminal device in a first time unit, a first reference signal used for channel measurement sent by a first terminal device, wherein the first time unit is associated with a second time unit, the first time unit is before the second time unit, and the second time unit is a time unit in which the first terminal device and the second terminal device perform SL transmission; and
sending, by the second terminal device in a third time unit, first feedback information to the first terminal device, wherein the first feedback information is determined by the second terminal device based on the first reference signal, the first feedback information is used by the first terminal device to determine a parameter for SL transmission with the second terminal device in the second time unit, the third time unit is after the first time unit, and the third time unit is before the second time unit.

17. The method according to claim 16, wherein the second time unit is determined by the first terminal device in a fourth time unit, the fourth time unit is before the first time unit, and the first time unit is determined by the first terminal device based on the second time unit and an association relationship between the second time unit and the first time unit.

18. The method according to claim 16 or 17, wherein the first time unit being associated with the second time unit comprises:
the first time unit is a time unit that is closest to the second time unit and that is in a time unit meeting a first condition, wherein the first condition is that a time interval between the first time unit and the second time unit is greater than or not less than a first time interval.

19. The method according to any one of claims 16 to 18, wherein the receiving, by a second terminal device in a first time unit, a first reference signal used for channel measurement sent by a first terminal device comprises:
receiving, by the second terminal device, the first reference signal sent by the first terminal device on a first resource, wherein the first resource is located in the first time unit.

20. The method according to claim 19, wherein the first time unit being associated with the second time unit comprises:

the first time unit is associated with N time units, wherein N is a positive integer less than or equal to M, M is a positive integer, the second time unit is an $i^{th}$ time unit in the N time units, and $0 \leq i < N$; and

an index range of resource elements REs in each physical resource block PRB in a j$^{th}$ frequency domain unit on a first resource that corresponds to a j$^{th}$ frequency domain unit of the second time unit is [i*N$_{REset}$, (i+1)*N$_{REset}$-1], wherein $N_{REset} = \lfloor 12/M \rfloor$ ; or an index range of PRBs on a first resource that corresponds to a j$^{th}$ frequency domain unit of the second time unit is [(i+j*M)* N$_{PRBset}$ , (i+1+j*M)* N$_{PRBset}$ -1], wherein $N_{PRBset} = \lfloor N_{PRB}/(N_{subCH} * M) \rfloor$ , 0≤j<N$_{subCH}$, N$_{subCH}$ is a quantity of frequency domain units in a resource pool, and N$_{PRB}$ is a quantity of PRBs comprised in the first resource.

21. The method according to claim 19 or 20, wherein the receiving, by the second terminal device, the first reference signal sent by the first terminal device on a first resource comprises:
receiving, by the second terminal device on at least one RE, the first reference signal sent by the first terminal device, wherein the first resource comprises the at least one RE, and the at least one RE is determined based on a source address and/or a target address of the first terminal device.

22. The method according to any one of claims 16 to 21, wherein the first resource is a periodic resource.

23. The method according to claim 22, wherein at least one of the following is preconfigured by the resource pool or configured by a network device:

the association relationship between the second time unit and the first time unit;
a period of the first resource;
a maximum quantity of time units associated with the first time unit; and
the first time interval.

24. The method according to any one of claims 19 to 23, wherein the first resource comprises one or more symbols, a last symbol before the first resource is used by the first terminal device to send a first signal, transmit power of the first signal is equal to transmit power of each symbol used by the first terminal device to send the first reference signal, and/or a 1$^{st}$ symbol after the first resource is not used to transmit a physical sidelink shared channel PSSCH and/or a physical sidelink control channel PSCCH.

25. The method according to claim 24, wherein that a last symbol before the first resource is used by the first terminal device to send a first signal comprises:
the last symbol before the first resource is used by the first terminal device to send the first reference signal to the second terminal device.

26. The method according to any one of claims 19 to 25, wherein transmit power of an RE used to send the first reference signal in the first resource is equal to transmit power of an RE used for SL transmission in a second resource; or total transmit power of all REs in each symbol used to send the first reference signal in the first resource is equal to total transmit power of all REs in each symbol used for SL transmission in a second resource.

27. The method according to any one of claims 16 to 26, wherein before the receiving, by a second terminal device in a first time unit, a first reference signal used for channel measurement sent by a first terminal device, the method further comprises:
receiving, by the second terminal device, first indication information sent by the first terminal device, wherein the first indication information indicates the second terminal device to perform channel measurement before the second time unit; or the first indication information indicates the second terminal device to perform channel measurement in a time unit associated with the second time unit; or the first indication information indicates the second terminal device to perform periodic channel measurement.

28. The method according to any one of claims 16 to 27, wherein the first time unit is a time unit that is determined by a third terminal device and that is for sending a second reference signal to the first terminal device, the first time unit is associated with a fifth time unit, the fifth time unit is a time unit in which the third terminal device and the first terminal device perform SL transmission, and a priority of SL transmission between the first terminal device and the second terminal device is higher than or equal to a priority of SL transmission between the third terminal device and the first terminal device.

29. The method according to any one of claims 16 to 28, wherein a time interval between the first time unit and the third time unit is greater than or not less than a sum of a minimum time required by the second terminal device to perform channel measurement and a minimum time required by the second terminal device to generate the first feedback information; and a time interval between the third time unit and the second time unit is greater than or not less than a sum of a minimum time required by the first terminal device to decode the first feedback information and a minimum time required by the first terminal device to generate an SL transmission signal.

30. The method according to any one of claims 16 to 29, wherein a sequence of the first reference signal is generated based on the source address and/or the target address of the first terminal device.

31. A first terminal device, comprising one or more processors and one or more memories, wherein
the one or more memories are coupled to the one or more processors, the one or more memories are configured to store computer program code, the computer program code comprises computer instructions, and when the one or more processors execute the computer instructions, the first terminal device is enabled to perform the method according to any one of claims 1 to 15.

32. A second terminal device, comprising one or more processors and one or more memories, wherein
the one or more memories are coupled to the one or more processors, the one or more memories are configured to store computer program code, the computer program code comprises computer instructions, and when the one or more processors execute the computer instructions, the second terminal device is enabled to perform the method according to any one of claims 16 to 30.

33. A computer-readable storage medium, wherein the computer-readable storage medium stores computer-executable instructions; and when invoked by a computer, the computer-executable instructions are used to enable the computer to perform the method according to any one of claims 1 to 15 or the method according to any one of claims 16 to 30.

34. A computer program product comprising instructions, wherein when the computer program product runs on a computer, the computer is enabled to perform the method according to any one of claims 1 to 15 or the method according to any one of claims 16 to 30.

35. A chip, wherein the chip is coupled to a memory, and is configured to read and execute program instructions stored in the memory, to perform the method according to any one of claims 1 to 15 or the method according to any one of claims 16 to 30.

FIG. 1

EP 4 447 364 A1

One PRB

A PSSCH occupies N PRBs

...

CSI-RS RE

AGC

GAP

One subcarrier

One slot

FIG. 2

UE 1: A period includes three slots

UE 2: A period includes three slots

UE 3: A period includes three slots

UE 4: A period includes five slots

The UE 4 collides with the UE 1

The UE 4 collides with the UE 3

The UE 4 collides with the UE 2

FIG. 3

First terminal device

Second terminal device

S400: Determine a first time unit in a fourth time unit

S401: Send a first reference signal in the first time unit

S402: Send first feedback information in a third time unit

S403: Perform SL transmission in a second time unit

FIG. 4

| Fourth time unit | ... | First time unit | ... | Third time unit | ... | Second time unit |

FIG. 5

FIG. 6a

FIG. 6b

FIG. 6c

EP 4 447 364 A1

Slot 0

| | | PRB 19 | | | | |
| | | PRB 18 | | | | |
| | | | | | | |
| | | ... | GAP | AGC | CSI-RS | GAP |
| | | | | | | |
| | | PRB 1 | | | | |
| | | PRB 0 | | | | |

0  1          10 11 12 13

(a)

Slot 0

| | | | | PRB 19 | |
| | | | | PRB 18 | |
| | | | | | |
| AGC | CSI-RS | GAP | AGC | ... | |
| | | | | | |
| | | | | PRB 1 | |
| | | | | PRB 0 | |

0  1  2  3                13

(b)

FIG. 7

Fourth slot ... First slot [CSI-RS] ... Third slot [CSI feedback] ... Second slot [PSSCH resource]

FIG. 8

900

Communication apparatus

901

902

Transceiver unit

Processing unit

FIG. 9

1000

Communication apparatus

1001

1002

Interface circuit

Processor

1003

Memory

FIG. 10

| | INTERNATIONAL SEARCH REPORT | International application No. |
|---|---|---|
| | | **PCT/CN2023/070572** |

**A. CLASSIFICATION OF SUBJECT MATTER**

H04L5/00(2006.01)i;H04W24/08(2009.01)i

According to International Patent Classification (IPC) or to both national classification and IPC

**B. FIELDS SEARCHED**

Minimum documentation searched (classification system followed by classification symbols)

IPC: H04L; H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 边链路, 侧链路, 旁链路, 侧行链路, 反馈, 资源, 关联, 时间, 时隙, 时域, 索引, sidelink, SL, CSI, RS, reference signal, time, slot, relation, PRB, RE, resource

**C. DOCUMENTS CONSIDERED TO BE RELEVANT**

| Category* | Citation of document, with indication, where appropriate, of the relevant passages | Relevant to claim No. |
|---|---|---|
| A | CN 111436131 A (HUAWEI TECHNOLOGIES CO., LTD.) 21 July 2020 (2020-07-21) description, paragraphs [0004]-[0074] and [0118]-[0135] | 1-35 |
| A | CN 112398575 A (HUAWEI TECHNOLOGIES CO., LTD.) 23 February 2021 (2021-02-23) description, paragraphs [0003]-[0005] | 1-35 |
| A | CN 110535611 A (ZTE CORP.) 03 December 2019 (2019-12-03) entire document | 1-35 |
| A | WO 2021071328 A1 (LG ELECTRONICS INC.) 15 April 2021 (2021-04-15) entire document | 1-35 |
| A | CN 113228546 A (BEIJING OPPO COMMUNICATIONS CO., LTD.) 06 August 2021 (2021-08-06) entire document | 1-35 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 May 2023** | **19 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

Form PCT/ISA/210 (patent family annex) (July 2022)

**INTERNATIONAL SEARCH REPORT**
Information on patent family members

International application No.

**PCT/CN2023/070572**

| Patent document cited in search report | | | Publication date (day/month/year) | Patent family member(s) | | | Publication date (day/month/year) |
|---|---|---|---|---|---|---|---|
| CN | 111436131 | A | 21 July 2020 | EP | 3905817 | A1 | 03 November 2021 |
| | | | | EP | 3905817 | A4 | 16 March 2022 |
| | | | | KR | 20210111845 | A | 13 September 2021 |
| | | | | US | 2021337514 | A1 | 28 October 2021 |
| | | | | WO | 2020143750 | A1 | 16 July 2020 |
| | | | | VN | 81336 | A | 25 October 2021 |
| CN | 112398575 | A | 23 February 2021 | WO | 2021032029 | A1 | 25 February 2021 |
| | | | | CN | 112398575 | B | 12 April 2022 |
| | | | | KR | 20220061132 | A | 12 May 2022 |
| | | | | US | 2022173829 | A1 | 02 June 2022 |
| | | | | EP | 4016892 | A1 | 22 June 2022 |
| | | | | CN | 114844596 | A | 02 August 2022 |
| | | | | JP | 2022544970 | W | 24 October 2022 |
| | | | | EP | 4016892 | A4 | 11 January 2023 |
| CN | 110535611 | A | 03 December 2019 | US | 2022272717 | A1 | 25 August 2022 |
| | | | | KR | 20220047801 | A | 19 April 2022 |
| | | | | EP | 4016905 | A1 | 22 June 2022 |
| | | | | WO | 2021027872 | A1 | 18 February 2021 |
| | | | | VN | 86636 | A | 25 May 2022 |
| | | | | IN | 202227006663 | A | 24 June 2022 |
| WO | 2021071328 | A1 | 15 April 2021 | KR | 20220085044 | A | 21 June 2022 |
| | | | | CN | 114556850 | A | 27 May 2022 |
| CN | 113228546 | A | 06 August 2021 | CN | 113228546 | B | 28 October 2022 |
| | | | | WO | 2020191774 | A1 | 01 October 2020 |

**REFERENCES CITED IN THE DESCRIPTION**

**Patent documents cited in the description**

- CN 202210012729

- CN 202210117890